# EUROPEAN PATENT APPLICATION

(11) **EP 4 343 657 A1**
(43) Date of publication of application: **27.03.2024**
(21) Application number: 23189617.6
(22) Date of filing: 03.08.2023
(51) Int. Cl.: G06Q 20/20, G06Q 20/32, G07G 1/00, G07G 1/14

(54) **TRANSACTION PROCESSIG APPARATUS AND INFORMATION PROCESSING PROGRAM**

(30) Priority: 26.09.2022 JP 2022152790
(71) Applicant: Toshiba TEC Kabushiki Kaisha, Tokyo 141-8562 (JP)
(72) Inventor: Komiyama, Hikaru, Tokyo, 141-8562 (JP); NAKAHARA, Kanako, Tokyo, 141-8562 (JP); Okuma, Yumiko, Tokyo, 141-8562 (JP)
(74) Representative: Bandpay & Greuter

(57) **Abstract**

According to one embodiment, a transaction processing apparatus includes a storage unit, a communication interface, and a processor. The processor is configured to register a commodity in a transaction based on commodity information sent from a user terminal via the communication interface. The processor is configured to determine whether the user terminal is located in a predetermined area in a store and execute processing for permitting a user of the user terminal to settle the transaction using an online settlement service via the user terminal only when the user terminal is determined to be located in the predetermined area.

## Description

### FIELD

Embodiments of the present disclosure relate to a transaction processing apparatus and an information processing program for retail stores and the like.

### BACKGROUND

A system for transaction processing performed using an information communication terminal owned by a customer as a user interface is known. In such a system, a smartphone or an information communication terminal lent to the user from a store can be used in such a system. The system may be referred to as a "smartphone POS system" or the like. In other systems, an information communication terminal attached to a shopping cart provided in the store can be used as a user interface. Such a system may be referred to as "cart POS system" or the like.

An online settlement service performed using the information communication terminal can be linked or associated with a smartphone POS system and a cart POS system.

However, if an online settlement can be performed anywhere in the store, inconveniences in store operation are likely to occur. For example, it may be unclear to a store clerk whether a commodity put in a shopping basket and then carried around or out of the store by the user has been paid for or not.

Under such circumstances, it would be desirable to avoid such inconveniences in store operation associated with use of an in-store online settlement service.

### DISCLOSURE OF THE INVENTION

To this end, a transaction processing apparatus, a transaction processing system according to the appended claims are provided. An information processing method is also provided.

The method comprises registering a commodity in a transaction based on commodity information sent from a user terminal via a communication interface;
determining whether the user terminal is located in a predetermined area in a store; and
executing processing for permitting a user of the user terminal to settle the transaction using an online settlement service via the user terminal only when the user terminal is determined to be located in the predetermined area.

Preferably, the user terminal is determined to be located in the predetermined area based upon receipt of a predetermined permission code from the user terminal via the communication interface.

Preferably, the method comprises acquiring a user identifier from the user terminal, wherein the user of the user terminal is permitted to use the online settlement service only if the user identifier is acquired from the user terminal.

Preferably, the method comprises transmitting a list of registered commodities in the transaction to an electronic receipt server associated with the acquired user identifier.

Preferably, the method comprises the user terminal is determined to be located in the predetermined area based on the user terminal is able to perform communication via a wireless communication apparatus having a communication range overlapping the predetermined area of the store.

Preferably, the user terminal is a cart-based point-of-sale terminal.

### BRIEF DESCRIPTION OF THE DRAWINGS

Fig. 1 is a block diagram of a transaction processing system according to an embodiment.
Fig. 2 is a block diagram of a transaction processing apparatus.
Fig. 3 is a diagram schematically showing a configuration of a data record included in a store database.
Fig. 4 is a diagram schematically showing a configuration of transaction data. Fig. 5 is a block diagram of an attendant terminal.
Fig. 6 is a block diagram of a user terminal.
Fig. 7 is a block diagram of a cart terminal.
Fig. 8 is a flowchart of user terminal processing.
Fig. 9 is a flowchart of user terminal processing.
Fig. 10 is a flowchart of smartphone POS processing.
Fig. 11 is a flowchart of smartphone POS processing.
Fig. 12 is a flowchart of smartphone POS processing.
Fig. 13 is a diagram showing an unusability screen.
Fig. 14 is a diagram showing a registration screen.
Fig. 15 is a diagram showing a commodity scan screen.
Fig. 16 is a diagram showing a registration check screen.
Fig. 17 is a diagram showing a first selection screen.
Fig. 18 is a diagram showing a permission code scan screen.
Fig. 19 is a flowchart of cart terminal processing.
Fig. 20 is a flowchart of cart terminal processing.
Fig. 21 is a flowchart of cart POS processing.
Fig. 22 is a diagram showing a first request screen.
Fig. 23 is a diagram showing a second request screen.
Fig. 24 is a diagram showing a transfer screen.

### DETAILED DESCRIPTION

The present disclosure can provide a transaction processing apparatus and an information processing program that can prevent inconveniences in store operation while allowing use of an online settlement service performed using an information communication terminal owned by a user.

According to one embodiment, a transaction processing apparatus includes a storage unit, a communication interface, and a processor. The processor is configured to register a commodity in a transaction based on commodity information sent from a user terminal via the communication interface. The processor is configured to determine whether the user terminal is located in a predetermined area in a store and execute processing for permitting a user of the user terminal to settle the transaction using an online settlement service via the user terminal only when the user terminal is determined to be located in the predetermined area.

An example of an embodiment is with reference to the drawings.

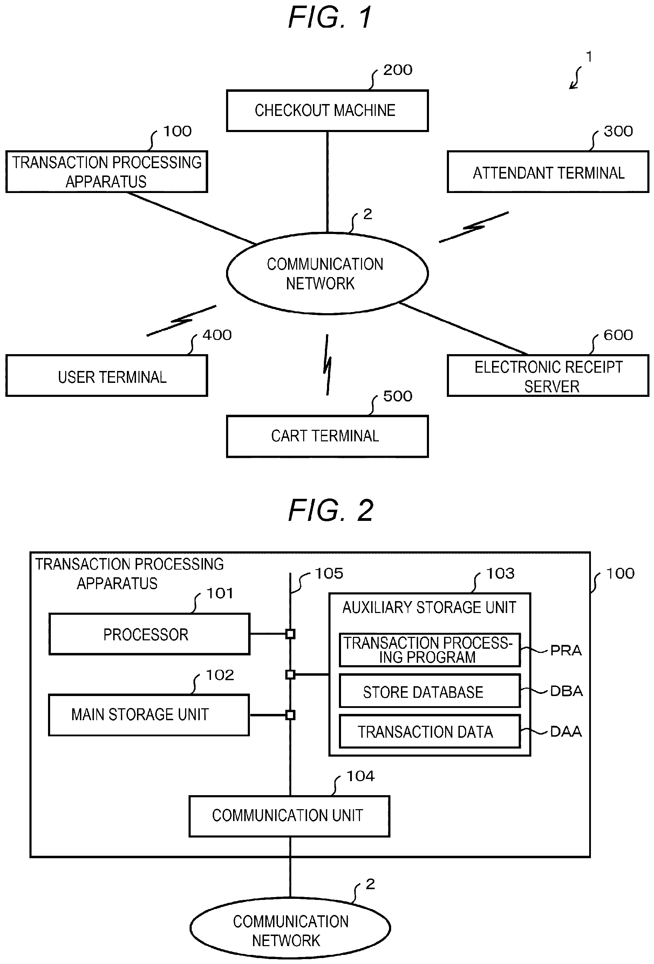

Fig. 1 is a block diagram showing a schematic configuration of a transaction processing system 1 according to this embodiment.

The transaction processing system 1 is configured by enabling a transaction processing apparatus 100, a checkout machine 200, an attendant terminal 300, a user terminal 400, a cart terminal 500, and an electronic receipt server 600 to communicate via a communication network 2.

As the communication network 2, the Internet, a VPN (virtual private network), a LAN (local area network), a public communication network, a mobile communication network, and the like can be used independently or in combination as appropriate. As the communication network 2, as an example, the Internet and the mobile communication network are used in combination.

Note that any numbers of transaction processing apparatuses 100, checkout machines 200, attendant terminals 300, user terminals 400, and cart terminals 500 may be respectively included in the transaction processing system 1. However, only one transaction processing apparatus 100, one checkout machine 200, one attendant terminal 300, one user terminal 400, and one cart terminal 500 are shown in Fig. 1.

The transaction processing apparatus 100 is an information processing apparatus that performs information processing for providing a transaction processing service for processing a trade transaction of commodities between a user and a store according to operation performed by the user in the store using the checkout machine 200, the user terminal 400, and the cart terminal 500 as user interface terminals. That is, typically, a customer who purchases a commodity in the store is the user of the transaction processing service. The transaction processing apparatus 100 is realized as, for example, a Cloud server and provides transaction processing services in a plurality of stores. The transaction processing apparatus 100 may be realized as, for example, a local server and provide a transaction processing service only in one store.

The check out machine 200 is installed in the store and executes checkout processing relating to checkout of a transaction processed by the transaction processing apparatus 100. In the checkout processing, the checkout machine 200 receives operation by an operator. That is, the checkout machine 200 is a terminal apparatus that receives operation of the user relating to checkout. The operator of the checkout machine 200 is mainly the user. A store clerk is sometimes the operator of the checkout machine 200.

The attendant terminal 300 is an information processing terminal operated by the store clerk. The attendant terminal 300 is a terminal apparatus for a user interface concerning information processing for supporting work of the store clerk concerning a transaction processed by the transaction processing system 1.

The user terminal 400 is an information processing terminal carried by the user. The user terminal 400 is typically owned by the user and carried into the store and used by the user. The user terminal 400 is a terminal apparatus that receives operation by the user for transaction processing in the transaction processing apparatus 100.

The cart terminal 500 is an information processing terminal attached to a shopping cart equipped in the store. The cart terminal 500 is lent to the user together with the shopping cart. The cart terminal 500 is a terminal apparatus that receives operation by the user for transaction processing in the transaction processing apparatus 100. The cart terminal 500 may include an information communication terminal lent to the user from the store and carried and used by the user.

The electronic receipt server 600 is an information processing apparatus that performs information processing for providing an electronic receipt service to the user. The electronic receipt server 600 is realized as, for example, a Cloud server and provides an electronic receipt service for making it possible to electronically view transactions in a plurality of stores. The transaction processing apparatus 100 may be realized as, for example, a local server and provide an electronic receipt service for making it possible to electronically view a transaction in only one store.

Fig. 2 is a block diagram of the transaction processing apparatus 100.

The transaction processing apparatus 100 includes a processor 101, a main storage unit 102, an auxiliary storage unit 103, a communication unit 104, and a transmission line 105. The processor 101, the main storage unit 102, the auxiliary storage unit 103, and the communication unit 104 are enabled to communicate via the transmission line 105.

The transaction processing apparatus 100 is configured by connecting the processor 101, the main storage unit 102, and the auxiliary storage unit 103 via the transmission line 105.

The processor 101 executes, according to an operating system and information processing programs such as application programs, information processing for controlling sections in order to realize various functions of the transaction processing apparatus 100.

The main storage unit 102 includes a read-only memory region and a rewritable memory region. The main storage unit 102 stores a part of the information processing programs explained above in the read-only memory region. The main storage unit 102 sometimes stores, in the read-only memory region or the rewritable memory region, data necessary for the processor 101 in executing processing for controlling the sections. The main storage unit 102 uses the rewritable memory region as a work area by the processor 101.

As the auxiliary storage unit 103, for example, an EEPROM (electric erasable programmable read-only memory), an HDD (hard disc drive), an SSD (solid-state drive), or other well-known various storage devices can be used. The auxiliary storage unit 103 stores data used by the processor 101 in performing various kinds of processing and data generated by the processing in the processor 101. The auxiliary storage unit 103 sometimes stores the information processing programs explained above. In this embodiment, the auxiliary storage unit 103 stores a transaction processing program PRA that is one of the information processing programs. The transaction processing program PRA is an application program with instructions for a procedure of transaction processing. A part of a storage region of the auxiliary storage unit 103 is used as a region for storing a store database DBA and transaction data DAA. The store database DBA is a database for managing a store that provides a transaction processing service by the transaction processing apparatus 100. The transaction data DAA is data representing content of one transaction.

The communication unit 104 executes communication processing for performing data communication via the communication network 2. As the communication unit 104, for example, an existing wired communication device for the Internet can be used. Note that, as the communication unit 104, a wireless communication device connected to the communication network 2 by wireless communication may be used instead of or in addition to the wired communication device.

The transmission line 105 includes an address bus, a data bus, and a control signal line and transmits data and control signals transmitted and received among the sections connected to the transmission line 105.

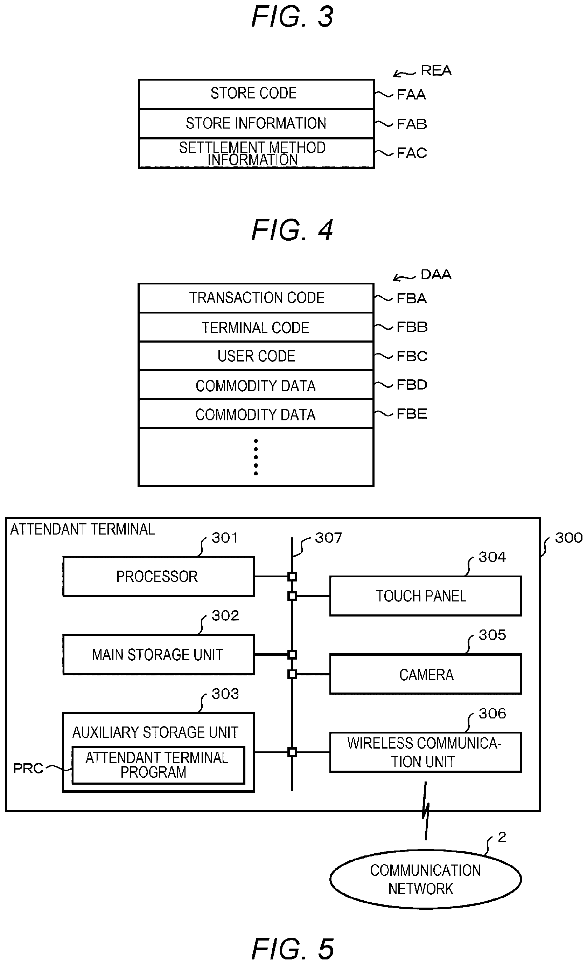

Fig. 3 is a diagram schematically showing a configuration of one data record REA included in the store database DBA.

The store database DBA is a set of data records REA correlated with each of stores that provide the transaction processing service by the transaction processing apparatus 100.

The data record REA includes fields FAA, FAB, and FAC. A store code serving as an identifier for identifying the store correlated with the data record REA is set in the field FAA. Various kinds of store information necessary in providing the transaction processing service in the store correlated with the data record REA are set in the field FBA. The store information includes, for example, information representing a time period in which use of the transaction processing service is allowed in the store (hereinafter referred to as usable time period). Settlement method information representing a settlement method allowed to be used when a price of a transaction processed by the transaction processing service in the store correlated with the data record REA is settled using an online settlement service is set in the field FAC.

Fig. 4 is a diagram schematically showing a configuration of the transaction data DAA.

The transaction data DAA is generated concerning each of transactions being processed in the transaction processing apparatus 100 and is stored in the auxiliary storage unit 103. Consequently, no transaction data DAA is stored in the auxiliary storage unit 103 in some cases and a plurality of transaction data DAA are simultaneously stored in the auxiliary storage unit 103 in other cases.

The transaction data DAA includes fields FBA, FBB, and FBC. The transaction data DAA can include any number of subsequent fields including a field FBD. A transaction code serving as an identifier of the transaction is set in the field FBA. A terminal code serving an identifier of the user terminal 400 or the cart terminal 500 used by the user who performs the transaction is set in the field FBB. A user code serving as an identifier of the user who performs the transaction is set in the field FBC. When there are commodities already registered as targets of the transaction (hereinafter referred to as transaction commodities), fields FBD, FBE, and the like respectively correlated with the transaction commodities are added to the transaction data DAA. Commodity data concerning different transaction commodities are respectively set in the fields FBD, FBE, and the like. The commodity data include a commodity code and a quantity serving as identifiers of the transaction commodities. The commodity data may include other various kinds of information such as a commodity name, a unit price, and discount information.

As hardware of the transaction processing apparatus 100, a general-purpose server apparatus can be used. In general, transfer of the transaction processing apparatus 100 is performed in with the transaction processing program PRA already stored in the auxiliary storage unit 103 but without the store database DBA and the transaction data DAA being stored in the auxiliary storage unit 103. However, the hardware without the transaction processing program PRA stored in the auxiliary storage unit 103, which may then be subsequently provided or transferred. In some instances, an application program or programs of the same type but of different versions may be stored in the auxiliary storage unit 103 and the transaction processing program PRA may be individually transferred. The transaction processing apparatus 100 may be configured by the transaction processing program PRA being written in the auxiliary storage unit 103 according to operation of any operator. Transfer of the transaction processing program PRA can be performed by recording the transaction processing program PRA in a removable recording medium such as a magnetic disk, a magneto-optical disk, an optical disk, or a semiconductor memory or can be performed by communication via a network.

Fig. 5 is a block diagram of the attendant terminal 300.

The attendant terminal 300 includes a processor 301, a main storage unit 302, an auxiliary storage unit 303, a touch panel 304, a camera 305, a wireless communication unit 306, and a transmission line 307.

In general, basic functions of the processor 301, the main storage unit 302, the auxiliary storage unit 303, and the transmission line 307 are equivalent to those of the processor 101, the main storage unit 102, the auxiliary storage unit 103, and the transmission line 105. However, more specifically, the auxiliary storage unit 303 stores an attendant terminal program PRC instead of the transaction processing program PRA. The attendant terminal program PRC is an application program describing a procedure of information processing for the processor 301 for causing the attendant terminal 300 to operate as a user interface for the store clerk who supports the transaction processed by the transaction processing apparatus 100.

The touch panel 304 displays a screen for presenting information to an operator. An instruction by touch operation on the screen by the operator is input to the touch panel 304.

The camera 305 includes an optical system and an image sensor and generates, with the image sensor, image data representing an image in a visual field formed by the optical system.

The wireless communication unit 306 executes communication processing for performing data communication via the communication network 2. As the wireless communication unit 306, for example, an existing wireless communication device for a wireless LAN can be used. Note that a communication unit connected to the communication network 2 by wire may be used instead of or in addition to the wireless communication unit 306.

As hardware of the attendant terminal 300, for example, a tablet-type information processing apparatus or a portable information processing apparatus such as a smartphone can be used. As the hardware of the attendant terminal 300, a standalone computer apparatus may be used.

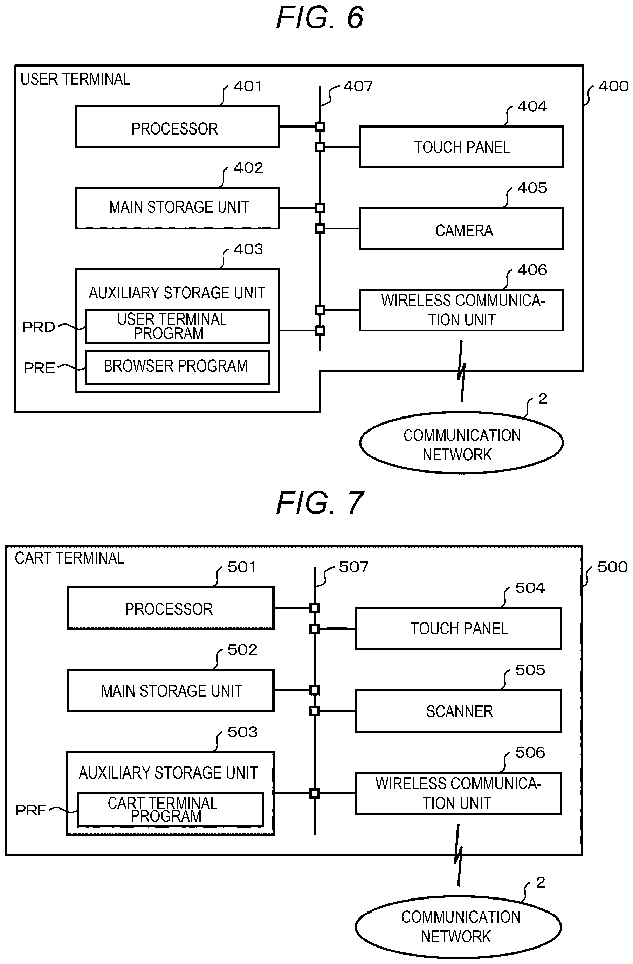

Fig. 6 is a block diagram of the user terminal 400.

The user terminal 400 includes a processor 401, a main storage unit 402, an auxiliary storage unit 403, a touch panel 404, a camera 405, a wireless communication unit 406, and a transmission line 407.

In general, basic functions of the processor 401, the main storage unit 402, the auxiliary storage unit 403, and the transmission line 407 are equivalent to those of the processor 101, the main storage unit 102, the auxiliary storage unit 103, and the transmission line 105. Likewise, the basic functions of the touch panel 404, the camera 405, and the wireless communication unit 406 are equivalent to those of the touch panel 304, the camera 305, and the wireless communication unit 306. However, more specifically, the auxiliary storage unit 403 stores a user terminal program PRD instead of the transaction processing program PRA. The user terminal program PRD is an application program describing a procedure of information processing for the processor 401 for causing the user terminal 400 to operate as a user interface for the transaction processing by the transaction processing apparatus 100. The auxiliary storage unit 403 stores a browser program PRE. The browser program PRE is an application program describing a procedure of information processing for Web browsing via the communication network 2. As the browser program PRE, a general-purpose browser application included in a smartphone or the like can be used. The wireless communication unit 406 typically includes a well-known communication device for performing data communication via a mobile communication network. However, the wireless communication unit 406 may include an existing wireless communication device for a wireless LAN instead of or in addition to the communication device described above.

As basic hardware of the user terminal 400, it is assumed that, for example, hardware of the smartphone is used.

Fig. 7 is a block diagram of the cart terminal 500.

The cart terminal 500 includes a processor 501, a main storage unit 502, an auxiliary storage unit 503, a touch panel 504, a scanner 505, a wireless communication unit 506, and a transmission line 507.

In general, basic functions of the processor 501, the main storage unit 502, the auxiliary storage unit 503, and the transmission line 507 are equivalent to those of the processor 101, the main storage unit 102, the auxiliary storage unit 103, and the transmission line 105. of the basic functions of the touch panel 504 and the wireless communication unit 506 are equivalent to those of the touch panel 304 and the wireless communication unit 306. However, more specifically, the auxiliary storage unit 503 stores a cart terminal program PRF instead of the transaction processing program PRA. The cart terminal program PRF is an application program describing a procedure of information processing for the processor 501 for causing the cart terminal 500 to operate as a user interface for the transaction processing by the transaction processing apparatus 100. The wireless communication unit 506 can be an existing wireless communication device for a wireless LAN. However, in some examples, the wireless communication unit 506 may also or instead include a communication device for performing data communication via a mobile communication network (e.g., a cellphone service or the like).

The scanner 505 optically scans a one-dimensional barcode and a two-dimensional barcode.

As basic hardware of the cart terminal 500, it is assumed that, for example, hardware of a tablet-type information processing apparatus is used. As the scanner 505, a configuration is assumed in which a scanner configured as a unit separate from the information processing apparatus is externally attached to the information processing apparatus. However, the cart terminal 500 may be configured by using, as an imaging device of the scanner 505, a camera incorporated in the information processing apparatus.

Subsequently, an operation of the transaction processing system 1 configured as explained above is explained. Note that contents of various kinds of processing explained below are non-limiting examples. A change of order of the processing, omission of a part of the processing, addition of other processing, or the like is possible as appropriate. In the following, explanation about certain aspects of the processing may be omitted in order to clearly explain characteristic operations of an embodiment. For example, when some error occurs, processing for coping with the error is sometimes performed. However, description such ancillary processes may be omitted.

A service provided to the user by the transaction processing system 1 is called smartphone POS service when the user uses the user terminal 400 and is called cart POS service when the user uses the cart terminal 500.

In order to use the smartphone POS service, the user installs the user terminal program PRD in an information processing apparatus such as a smartphone owned by the user himself or herself and enables the information processing apparatus to be used as the user terminal 400. The user enters a store set as a provision target of the smartphone POS service while carrying the user terminal 400 in a state in which the user causes the processor 401 to execute user terminal processing according to the user terminal program PRD.

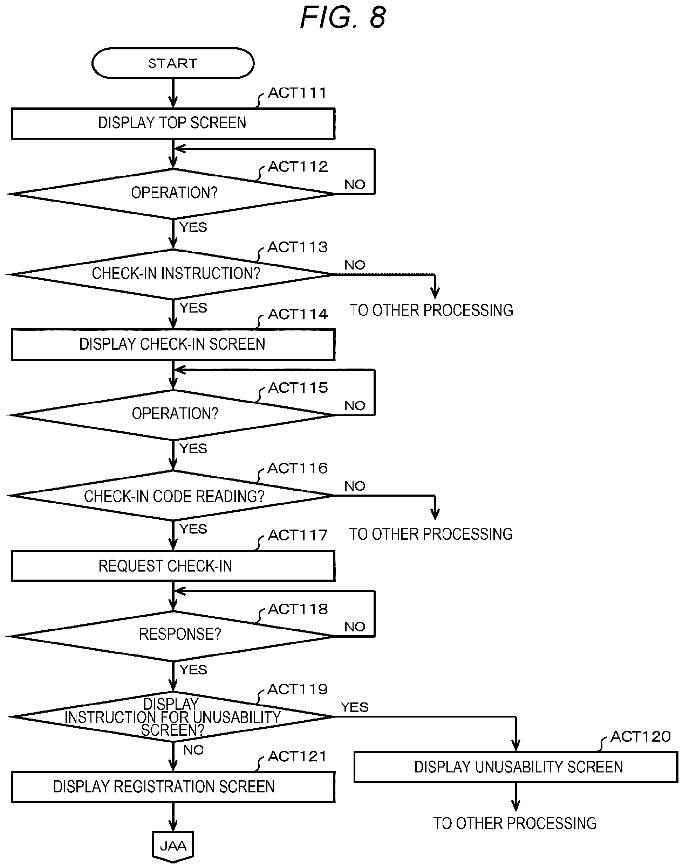

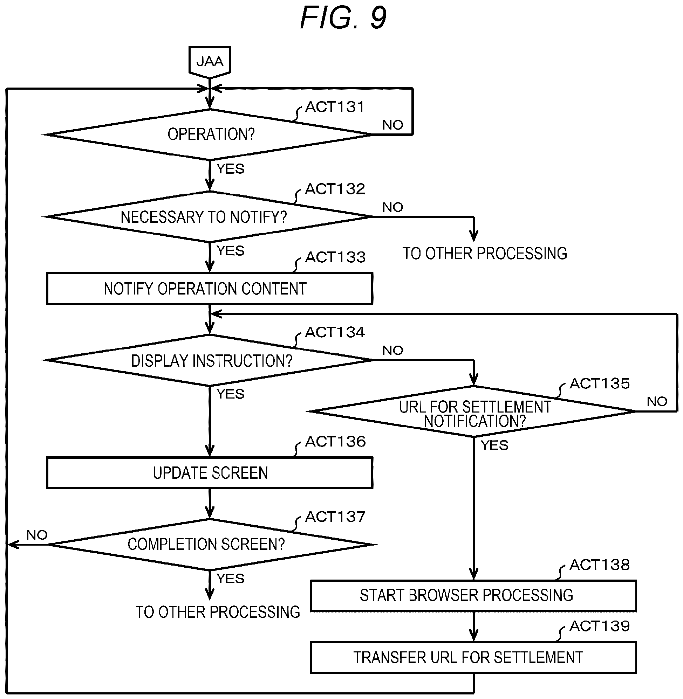

Fig. 8 and Fig. 9 are flowcharts of the user terminal processing.

In ACT 111, the processor 401 causes the touch panel 404 to display a top screen. The top screen is a screen for causing the user to designate a function that should be executed out of various functions realized by the user terminal processing. The top screen displays a softkey for receiving a check-in instruction.

In the store set as the provision target of the smartphone POS service, a check-in code representing check-in data is posted at an entrance of the store, in the store, or the like. The check-in code is, for example, a two-dimensional barcode. The check-in data includes at least a store code. The check-in code is different for each store.

If the user intends to start use of the smartphone POS service in the store, the user performs a predetermined operation such as tapping the softkey displayed on the top screen in order to receive the check-in instruction.

In ACT 112, the processor 401 waits for some operation by the user to be performed in a state in which the top screen is displayed. If some operation by the user is detected by, for example, the touch panel 404, the processor 401 determines YES and proceeds to ACT 113.

In ACT 113, the processor 401 checks whether the performed operation is operation for the check-in instruction. If not, the processor 101 determines NO, checks content of the operation, and proceeds to other processing for performing processing corresponding to the operation. As one kind of the other processing, for example, the processor 101 confirms that operation for instructing stop has been performed, cancels the check-in procedure, and performs the processing from ACT 111 again. As the other processing, another kind of processing or a plurality of kinds of processing are sometimes selectively performed.

If the operation for the check-in instruction has been performed, the processor 401 determines YES in ACT 113 and proceeds to ACT 114.

In ACT 114, the processor 401 causes the touch panel 404 to display a check-in screen. The check-in screen is a screen for guiding the user to cause the camera 405 of the user terminal 400 to image a check-in code.

In ACT 115, the processor 401 waits for some operation by the user to be performed. If succeeding in confirming that some operation by the user has been performed, the processor 401 determines YES and proceeds to ACT 116.

The user operates the user terminal 400 according to the check-in screen and causes the camera 405 of the user terminal 400 to image the check-in code posted in the store that the user uses.

When a two-dimensional barcode is imaged by the camera 405, the processor 401 considers that operation for causing the camera 405 to read the two-dimensional barcode has been performed, determines YES in ACT 115, and proceeds to ACT 116.

In ACT 116, the processor 401 checks whether the check-in code has been read by the performed operation explained above. If not, the processor 401 determines NO, checks content of the operation, and proceeds to other processing for performing processing corresponding to the operation. As one kind of the other processing, for example, the processor 401 confirms that, although operation for reading a two-dimensional barcode has been performed, the two-dimensional barcode is not the check-in code and displays a screen for notifying such an operation error to the user. As the other processing, another kind of processing or a plurality of kinds of processing are sometimes selectively performed. However, detailed explanation of the processing is omitted here.

If the check-in code is imaged by the camera 405, the processor 401 considers that the check-in code has been read by the performed operation explained above, determines YES in ACT 116, and proceeds to ACT 117.

In ACT 117, the processor 401 requests the transaction processing apparatus 100 to perform check-in. For example, the processor 401 delivers request data for the check-in request from the wireless communication unit 406 to the communication network 2 while addressing the request data to the transaction processing apparatus 100. The processor 401 includes, in the request data explained above, check-in data represented by the check-in code imaged by the camera 405 and a terminal code of the user terminal 400. Note that the terminal code is stored in, for example, the auxiliary storage unit 403. As the terminal code, for example, an identifier determined by the operation system of the user terminal 400 in installing the user terminal program PRD can be used. The identifier is, for example, a thirty-two digit code including mixed alphanumeric characters.

On the other hand, in order to use the electronic receipt service provided by the electronic receipt server 600, the user performs use registration and receives issuance of a user code in advance. When the user desires to use the online settlement service for settlement concerning a transaction performed using the smartphone POS service, as use setting for the user terminal program PRD, the user associates the user code of the electronic receipt service with the online settlement service. According to the association, the user code is stored in the main storage unit 402 or the auxiliary storage unit 403 in a state in which the processor 401 is accessible to the user code in the user terminal processing. If the user code is stored, the processor 401 includes the user code in the request data.

When the request data for the check-in request is transmitted to the transaction processing apparatus 100 by the communication network 2, in the transaction processing apparatus 100, the communication unit 104 receives the request data and temporarily saves the request data in the main storage unit 102 or the auxiliary storage unit 103.

When the request data delivered from the user terminal 400 is received by the transaction processing apparatus 100 in this way, the processor 101 starts transaction processing for the smartphone POS service (hereinafter referred to as smartphone POS processing) according to the transaction processing program PRA.

However, such a check-in procedure is only an example. Various changes are possible. For example, the processor 401 of the user terminal 400 may transmit, to the transaction processing apparatus 100, check-in data including position information acquired using a GPS (global positioning system), another positioning sensor, or the like after the start of the user terminal program PRD. For example, when receiving the position information explained above, the transaction processing apparatus 100 may acquire, from a database representing store information in correlation with the position information, store information of a store where the user terminal 400 that has transmitted the position information is located, and perform the check-in processing according to the store information.

If the processor 101 is already executing smartphone POS processing targeting a transaction concerning a different user, the processor 101 starts new smartphone POS processing as processing for a thread different from the smartphone POS processing. That is, the processor 101 sometimes executes a plurality of kinds of smartphone POS processing in parallel. In this case, a plurality of user terminals 400 used by the transaction processing apparatus 100 as user interface terminals are simultaneously present. However, the following explanation focuses on only processing of a transaction concerning one user. Consequently, "user terminal 400" in the following explanation indicates one user terminal 400 used by the user for the focused smartphone POS processing. "Transaction" in the following explanation indicates a transaction targeted by the focused processing.

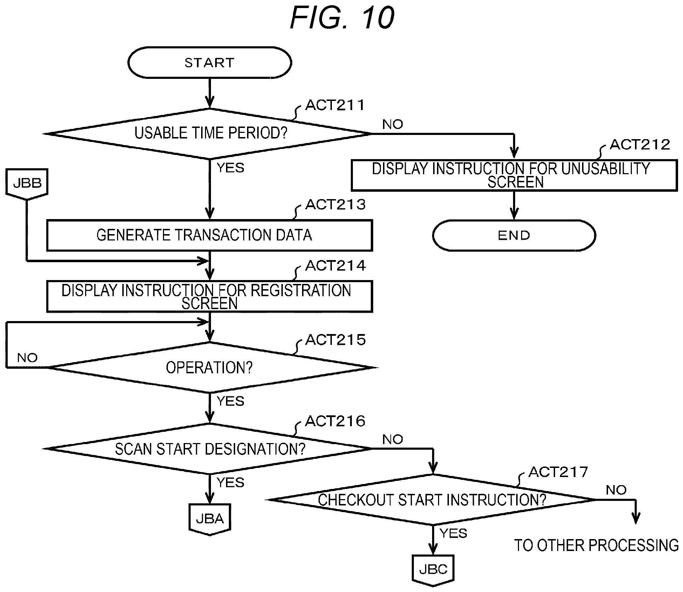

Fig. 10, Fig. 11, and Fig. 12 are flowcharts of the smartphone POS processing. In the following explanation, as an example, a check-in code is read by the user terminal 400 and a store code is included in check-in data represented by the check-in code.

In ACT 211 in Fig. 10, the processor 101 checks whether a present point time is within a usable time period. That is, for example, the processor 101 finds out, from the store database DBA, the data record REA in which the store code included in the received check-in data is set in the field FAA and determines a usable time period represented by information included in store information set in the field FAB of the data record REA. For example, if present time is not included in the determined usable time period, the processor 101 determines NO and proceeds to ACT 212. Note that the usable time period may be decided as appropriate for each store.

In ACT 212, the processor 101 instructs the user terminal 400 to display an unusability screen as a response to the check-in request. The unusability screen is a screen for causing the user to recognize that the smartphone POS service cannot be used. For example, the processor 101 delivers instruction data for instructing the user terminal 400 to display a usability screen from the communication unit 104 to the communication network 2 while addressing the instruction data to the user terminal 400. Thereafter, the processor 101 ends the smartphone POS processing.

When the instruction data for the instruction of the screen display is transmitted to the user terminal 400 by the communication network 2, in the user terminal 400, the wireless communication unit 406 receives the instruction data. When receiving the instruction data, the wireless communication unit 406 notifies the processor 401 to that effect. If the instruction data for the instruction of the screen display is received, with the user terminal processing, the processor 401 causes the touch panel 404 to display a screen corresponding to the instruction data.

The instruction data for the instruction of the screen display may include screen data representing a screen that should be displayed according to the instruction data and may include, without including such screen data, data for enabling the user terminal 400 to specify a screen that should be displayed. In the former case, the processor 101 generates screen data representing the screen to be displayed in the user terminal 400 and, then, includes the screen data in the instruction data. In the latter case, the processor 101 includes, in the instruction data, , a screen identifier set for identifying the particular screen to be displayed on the user terminal 400 or a notification identifier indicating an opportunity for predetermined screen display. The notification identifier is, for example, identifies, a notification indicating that a particular message such as "outside the usable time period" should be displayed at the user terminal 400.

In the user terminal 400, the processor 401 requests the check-in in ACT 117 in Fig. 8 and proceeds to ACT 118.

In ACT 118, the processor 401 waits for a response to the check-in request. If instruction data for instructing display of some screen is received by the wireless communication unit 406, the processor 401 considers that a response has been performed and determines YES and proceeds to ACT 119.

In ACT 119, the processor 401 checks whether display of the unusability screen has been instructed. If the display of the unusability screen has been instructed, the processor 401 determines YES and proceeds to ACT 120.

In ACT 120, the processor 401 causes the touch panel 404 to display the unusability screen.

If screen data is included in the received instruction data, the processor 401 causes the touch panel 404 to directly display a screen represented by the screen data. If a screen identifier is included in the received instruction data, the processor 401 generates a screen identified by the screen identifier and causes the touch panel 404 to display the screen. If a notification identifier is included in the received instruction data, the processor 401 determines a screen that should be displayed according to notification identified by the notification identifier, generates the screen, and causes the touch panel 404 to display the screen.

Transmission and reception of display instructions for various screens can be performed in the same manner as explained above, although content of a screen set as a display target may be different.

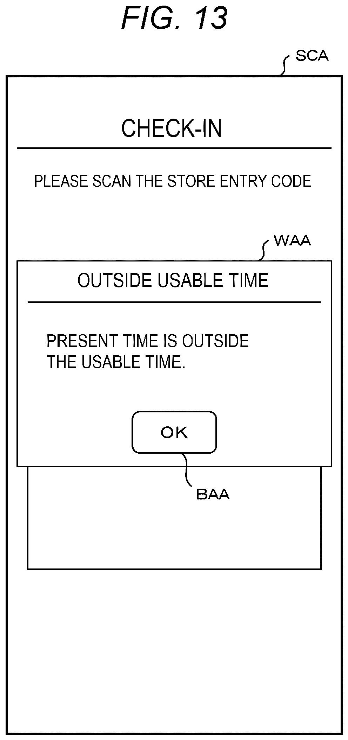

Fig. 13 is a diagram showing an unusability screen SCA.

The unusability screen SCA is a screen obtained by superimposing and displaying a popup window WAA on a screen displayed on the touch panel 404 in a state in which scan of a check-in code is performed. The popup window WAA displays a character message for informing the user that present time is outside a usable time and a button BAA. The button BAA is a softkey for receiving a declaration by the user that guidance is checked on the unusability screen SCA.

If checking the guidance on the unusability screen SCA, the user taps the button BAA. When such operation is detected on the touch panel 404, the processor 401 ends the display of the unusability screen SCA and restores the display screen of the touch panel 404 to, for example, the screen for performing the scan of the check-in code.

On the other hand, if the present time is included in the usable time period, the processor 101 determines YES in ACT 211 in Fig. 10 and proceeds to ACT 213.

In ACT 213, the processor 101 generates new transaction data. That is, the processor 101 determines, according to a predetermined rule or the like, a new transaction code that is different from a other transactions, generates new transaction data DAA in which the new transaction code is set in the field FBA and the terminal code received with the check-in data is set in the field FBB, and causes the auxiliary storage unit 103 to store the transaction data DAA. Note that, if a user code is received together with the check-in code, the processor 101 sets the user code in the field FBC of the transaction data DAA. If a user code is not received together with the check-in data, the processor 101 sets the field FBC of the transaction data DAA to a null state or value. The processor 101 executes the information processing based on the transaction processing program PRA in this way, whereby the computer including the processor 101 functions as acquiring means.

In ACT 214 in Fig. 10, the processor 101 instructs the user terminal 400 to display a registration screen as a response to the check-in request. The registration screen is a screen including a list of commodities registered as transaction commodities and for causing the user to recognize a registration state of the transaction commodities. For example, the processor 101 generates screen data representing a registration screen on which the registration state of the transaction commodities is reflected and includes the screen data in instruction data for instructing the user terminal 400 to perform screen display. Unlike the above explanation, the processor 101 may include, without including the screen data in the instruction data, in the instruction data, a screen identifier of the registration screen or a notification identifier for identifying notification "check-in confirmation is completed". The processor 401 of the user terminal 400 may perform the generation of the registration screen.

In the user terminal 400, when determining YES in ACT 118 in Fig. 8 according to reception of the instruction data for the display instruction for the registration screen and proceeding to ACT 119, since the display instruction is not a display instruction for the unusability screen, the processor 401 determines NO and proceeds to ACT 121.

In ACT 121, the processor 401 causes the touch panel 404 to display the registration screen.

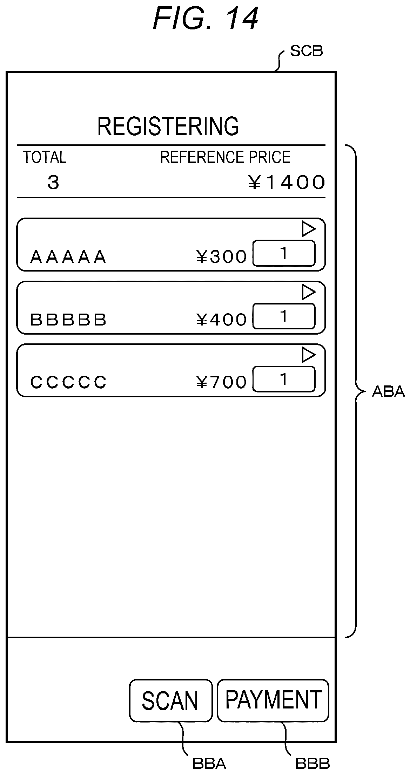

Fig. 14 is a diagram showing a registration screen SCB.

In the registration screen SCB, an image representing a registration state is arranged in a display area ABA. The registration screen SCB displays buttons BBA and BBB. The image arranged in the display area ABA represents, in an example shown in Fig. 14, a state in which one each item of and three items in total of commodities having commodity names "AAAAA", "BBBBB", and "CCCCC" and respectively having unit prices of 300 yen, 400 yen, and 700 yen are registered and a reference price of the commodities is 1400 yen. Note that the reference price is an amount calculated by subtracting a discount amount by various services such as a coupon service from a sum of unit prices of transaction commodities. If a transaction is settled while transaction commodities and services applied to the transaction commodities are not changed, the reference price is a settlement amount. Note that the image arranged in the display area ABA sequentially changes according to a registration state of transaction commodities. When the processor 101 executes ACT 214 in Fig. 10 for the first time, no transaction commodities have been registered yet. Therefore, on the registration screen SCB, the image arranged in the display area ABA is an image that does not presently include any information concerning commodities and indicates that a total number of items is 0 and the reference price is 0 yen.

The button BBA is a softkey for receiving an instruction to transition to a state in which a new commodity is scanned. The button BBB is a softkey for receiving designation of a checkout start. Note that the registration screen SCB and various screens explained below illustrate main display objects. Illustration of a part of the display objects is sometimes omitted. For example, an image for causing the user to imagine operation that the user should perform is sometimes included in a screen. The registration screen SCB and the various screens explained below are examples and may be decided as appropriate by, for example, a creator of the transaction processing program PRA.

If causing the touch panel 404 to display the registration screen SCB, the processor 401 proceeds to ACT 131 in Fig. 9.

In ACT 131, the processor 401 waits for some operation by the user to be performed. If some operation by the user is detected by the touch panel 404, the processor 401 determines YES and proceeds to ACT 132.

In ACT 132, the processor 401 checks whether it is necessary to notify the performed operation to the transaction processing apparatus 100. If the performed operation is not an operation predetermined as a notification target, the processor 401 determines NO, checks content of the operation, and proceeds to other processing in order to perform processing corresponding to the performed operation. As one kind of the other processing in this context, the processor 401 scrolls the registration screen according to a scroll operation. As other processing, another kind of processing or a plurality of kinds of processing can be performed.

If the performed operation is a notification target operation, the processor 401 determines YES and proceeds to ACT 133.

In ACT 133, the processor 401 notifies operation content to the transaction processing apparatus 100. For example, the processor 401 delivers notification data indicating the operation content from the wireless communication unit 406 to the communication network 2 while addressing this notification data to the transaction processing apparatus 100.

When the notification data is transmitted to the transaction processing apparatus 100 over the communication network 2, the communication unit 104 in the transaction processing apparatus 100 receives the notification data. Upon receiving the notification data, the communication unit 104 notifies the processor 101 to that effect.

Note that the transmission and reception of a display notification with operation contents concerning various other screens, such as those explained below, can be performed in the same manner as already explained above, although operation content can be different.

In ACT 215 in Fig. 10, the processor 101 waits for an operation to be performed at the user terminal 400. Upon being notified from the communication unit 104 that the notification data of operation content is received, the processor 101 determines YES and proceeds to ACT 216.

In ACT 216, the processor 101 checks whether the performed operation is operation for instructing a start of scan. If not, the processor 101 determines NO and proceeds to ACT 217.

In ACT 217, the processor 101 checks whether the performed operation is operation for instructing a start of checkout. If not, the processor 101 determines NO, checks content of the operation, and proceeds to other processing for performing processing corresponding to the operation. As one kind of the other processing, for example, the processor 101 confirms that operation for designating transaction stop has been performed and ends the registration processing after executing processing for stopping the transaction. As the other processing, another kind of processing or a plurality of kinds of processing are sometimes selectively performed. However, detailed explanation of the processing is omitted here.

The user searches for a commodity to be purchased in the store. For registering a commodity, the user performs a predetermined operation for designating a scan start such as tapping the button BBA on the registration screen SCB. This operation is a notification target. In the user terminal 400, the processor 401 determines YES in both of ACT 131 and ACT 132 in Fig. 9, proceeds to ACT 133, and transmits notification data indicating a scan start instruction.

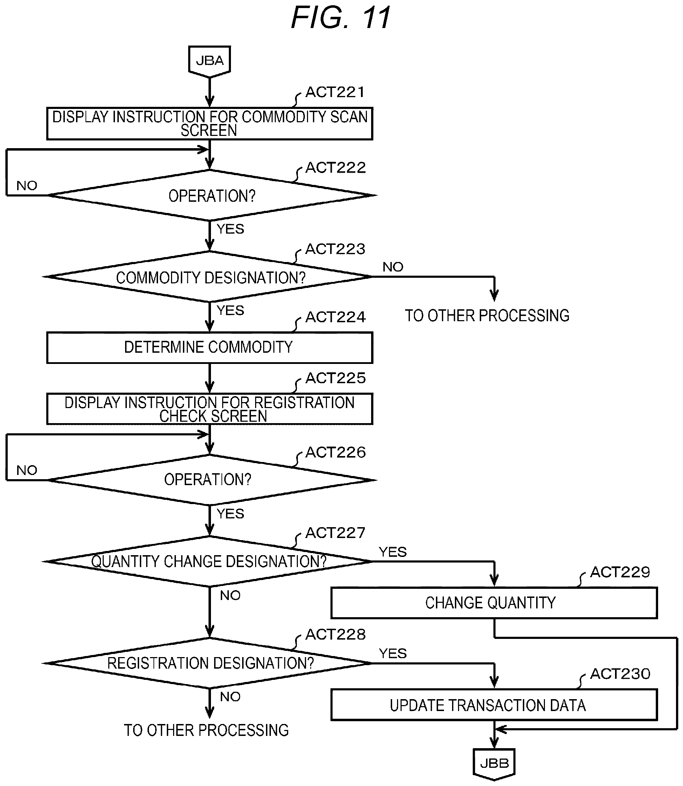

When the scan start instruction is notified from the user terminal 400 to the transaction processing apparatus 100 in this way, the processor 101 determines YES in ACT 216 in Fig. 10 and proceeds to ACT 221 in Fig. 11.

In ACT 221, the processor 101 instructs the user terminal 400 to display a commodity scan screen. The commodity scan screen is a screen for scanning a barcode representing a commodity code.

In the user terminal 400, the processor 401 proceeds to ACT 134 after notifying the operation content in ACT 133 in Fig. 9.

In ACT 134, the processor 401 checks whether a display instruction has been performed. If not, the processor 401 determines NO and proceeds to ACT 135.

In ACT 135, the processor 401 checks whether a URL for settlement has been notified. If not, the processor 401 determines NO and returns to ACT 134.

In this way, in ACT 134 and ACT 135, the processor 401 waits for the display instruction and the notification of the URL for settlement.

If instruction data for instructing display of some screen is transmitted from the transaction processing apparatus 100 and the instruction data is received by the wireless communication unit 406, the processor 401 determines YES in ACT 134 and proceeds to ACT 136.

In ACT 136, the processor 401 updates the display screen on the touch panel 404 according to the instruction. That is, the processor 401 updates the display screen on the touch panel 404 to the commodity scan screen according to the display instruction for the commodity scan screen.

In ACT 137, the processor 401 checks whether the display screen after the update is a completion screen. If the display screen is updated to a screen other than the completion screen as in the case in which the display screen is updated to the commodity scan screen, the processor 401 determines NO and returns to the waiting state in ACT 131. That is, the processor 401 transitions to a state of waiting for operation concerning the screen after the update.

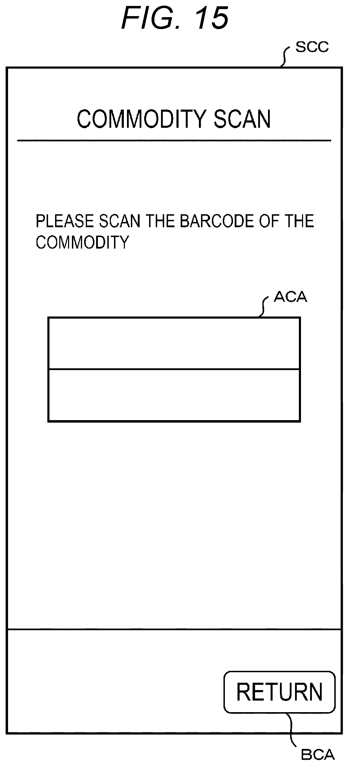

Fig. 15 is a diagram showing a commodity scan screen SCC.

The commodity scan screen SCC includes a display area ACA and a button BCA. The display area ACA is an area for displaying an image obtained by the camera 405. The button BCA is a softkey for the user to declare that the user stops scan of a commodity code.

In the user terminal 400, in displaying the commodity scan screen SCC, the processor 401 starts the camera 405 and superimposes and displays an image obtained from the camera 405 in the display area ACA. Note that, when a predetermined operation for designating a scan start is performed, the processor 401 may, without notifying the transaction processing apparatus 100, generate a commodity scan screen and cause the touch panel 404 to display the commodity scan screen. In this case, in the transaction processing apparatus 100, in ACT 216, the processor 101 performs processing in ACT 223 and, when determining YES in ACT 216, proceeds to ACT 224 without performing ACT 221 to ACT 223.

When the commodity scan screen SCC is displayed on the touch panel 404, the user operates the user terminal 400 such that a barcode displayed on a commodity about to be registered as a transaction commodity is pictured in the display area ACA. The processor 401 analyzes an image obtained by the camera 405 and attempts to read the barcode. When the barcode is successfully read by the processor 401, this operation is a notification target. The processor 401 determines YES in both of ACT 131 and ACT 132 in Fig. 9 and proceeds to ACT 133 and notifies the transaction processing apparatus 100 that a scan operation has been performed (commodity scan notification) along with the read barcode information (hereinafter referred to as barcode data).

For example, when cancelling the registration of a transaction commodity once and then attempting to check the registration state of the transaction commodity, the user performs a predetermined operation for designating a scan stop such as tapping the button BCA. This operation is also a notification target. The processor 401 determines YES in both of ACT 131 and ACT 132 in Fig. 9, proceeds to ACT 133, and notifies the transaction processing apparatus 100 that the operation for instructing a scan stop has been performed.

In the transaction processing apparatus 100, upon finishing instructing of the display of the commodity scan screen in ACT 221 in Fig. 11, the processor 101 proceeds to ACT 222.

In ACT 222, the processor 101 waits for operation to be performed in the user terminal 400. If operation content is notified from the user terminal 400, the processor 101 determines YES and proceeds to ACT 223.

In ACT 223, the processor 101 checks whether the performed operation is operation for designating a commodity. If not, the processor 101 determines NO, checks content of the operation, and proceeds to other processing for performing processing corresponding to the operation. As one kind of the other processing, for example, the processor 101 confirms that operation for designating scan stop, for example, tapping the button BCA has been performed, returns to ACT 214 in Fig. 10, and restores the display screen of the touch panel 404 in the user terminal 400 to the registration screen SCB. As the other processing, another kind of processing or a plurality of kinds of processing are sometimes selectively performed. However, detailed explanation of the processing is omitted here.

Note that the operation for designating the scan stop need not be set as the target of notification from the user terminal 400. After determining NO in ACT 132, the processor 401 may autonomously execute, in the user terminal 400, the processing for restoring the display screen of the touch panel 404 in the user terminal 400 to the registration screen SCB.

If the barcode data is notified and the barcode data represents a commodity code, the processor 101 considers that an operation for designating a commodity has been performed, determines YES in ACT 223, and proceeds to ACT 224.

In ACT 224, the processor 101 determines, based on the notified barcode data, a commodity that should be set as a transaction commodity. That is, for example, the processor 101 extracts the commodity code included in the barcode data and determines a commodity identified by the commodity code as the commodity that should be set as the transaction commodity (hereinafter referred to as candidate commodity). Note that, for example, the processor 101 may receive notification from the user terminal 400 indicating that operation for tapping a preset button displayed on the touch panel 404 has been performed and determine a commodity allocated to the preset button as the candidate commodity. For example, the processor 101 may receive notification from the user terminal 400 about a commodity code directly input to the touch panel 404 as a number sequence and determine a commodity identified by the commodity code as the candidate commodity.

In ACT 225, the processor 101 instructs the user terminal 400 to display a registration check screen. The registration check screen is a screen for checking whether to register the candidate commodity as the transaction commodity. The processor 101 may include screen data representing the registration check screen in instruction data for the display instruction for the registration check screen or may cause the processor 401 of the user terminal 400 to generate the registration check screen including data of the candidate commodity.

In the user terminal 400, when the instruction data for the display instruction for the registration check screen is received, the processor 401 determines YES in ACT 134 in Fig. 9, proceeds to ACT 136, and updates the display screen of the touch panel 404 to the registration check screen. Since the screen after the update is not the completion screen, the processor 401 determines NO in ACT 137 and returns to the waiting state in ACT 131.

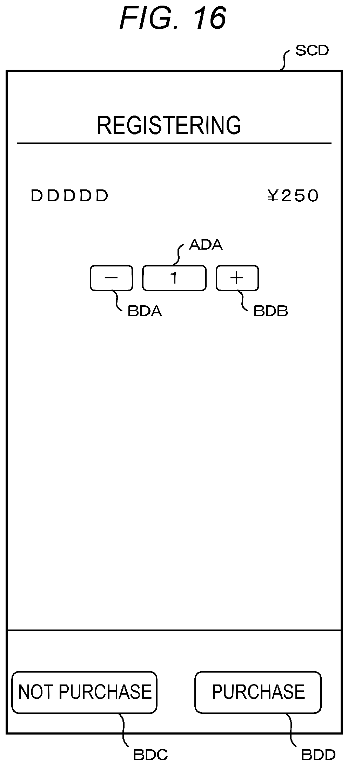

Fig. 16 is a diagram showing a registration check screen SCD.

The registration check screen SCD is an example of a case in which the candidate commodity is a commodity, a commodity name of which "DDDDD" and a unit price of which is 250 yen. The registration check screen SCD displays a display area ADA and buttons BDA, BDB, BDC, and BDD. The display area ADA displays a quantity on the inside. The button BDA is a softkey for receiving designation of a quantity reduction. The button BDB is a softkey for receiving designation of a quantity increase. The button BDC is a softkey for receiving designation for not registering the commodity as the transaction commodity. The button BDD is a softkey for receiving designation of registration as the transaction commodity.

In ACT 226 in Fig. 11, the processor 101 waits for operation to be performed in the user terminal 400. If operation content is notified from the user terminal 400, the processor 101 determines YES and proceeds to ACT 227.

In ACT 227, the processor 101 checks whether a change in a quantity has been designated. If not, the processor 101 determines NO and proceeds to ACT 228.

In ACT 228, the processor 101 checks whether designation for registering the candidate commodity as the transaction commodity has been performed. If not, the processor 101 determines NO, checks content of the operation, and proceeds to other processing for performing processing corresponding to the operation. As one kind of the other processing, the processor 101 confirms that a predetermined operation for a designation for cancelling registration (e.g., tapping the button BDC) has been performed and returns to ACT 221. As the other processing, another kind of processing or a plurality of kinds of processing may be performed.

If the user desires to change a quantity, the user designates a quantity change with a predetermined operation for, for example, tapping the button BDA or the button BDB. This operation is a notification target. In the user terminal 400, the processor 401 determines YES in both of ACT 131 and ACT 132 in Fig. 9, proceeds to ACT 133, and notifies the transaction processing apparatus 100 that the operation for designating the quantity change has been performed. According to this notification, the processor 101 determines YES in ACT 227 in Fig. 11 and proceeds to ACT 229.

In ACT 229, the processor 101 updates the transaction data DAAto change the quantity according to the designation. Thereafter, the processor 101 returns to ACT 214 in Fig. 10, instructs the user terminal 400 to display the registration screen SCB corresponding to the transaction data updated, and, then, returns to the waiting state in ACT 215.

Upon determining to register a candidate commodity displayed on the registration check screen SCD as the transaction commodity with the quantity displayed in the display area ADA, the user designates registration with a predetermined operation for, for example, tapping the button BDD. When such operation is notified from the user terminal 400, the processor 101 determines YES in ACT 228 and proceeds to ACT 230.

In ACT 230, the processor 101 registers the candidate commodity at the quantity displayed in the display area ADA. For example, the processor 101 updates the transaction data DAA to include commodity data indicating the commodity code of the candidate commodity and the quantity displayed in the display area ADA. The processor 101 executes the information processing based on the transaction processing program PRA in this way, whereby the computer including the processor 101 functions as registering means. Thereafter, the processor 101 returns to ACT 214 in Fig. 10, instructs the user terminal 400 to display the registration screen SCB corresponding to the transaction data updated, and, then, returns to the waiting state in ACT 215.

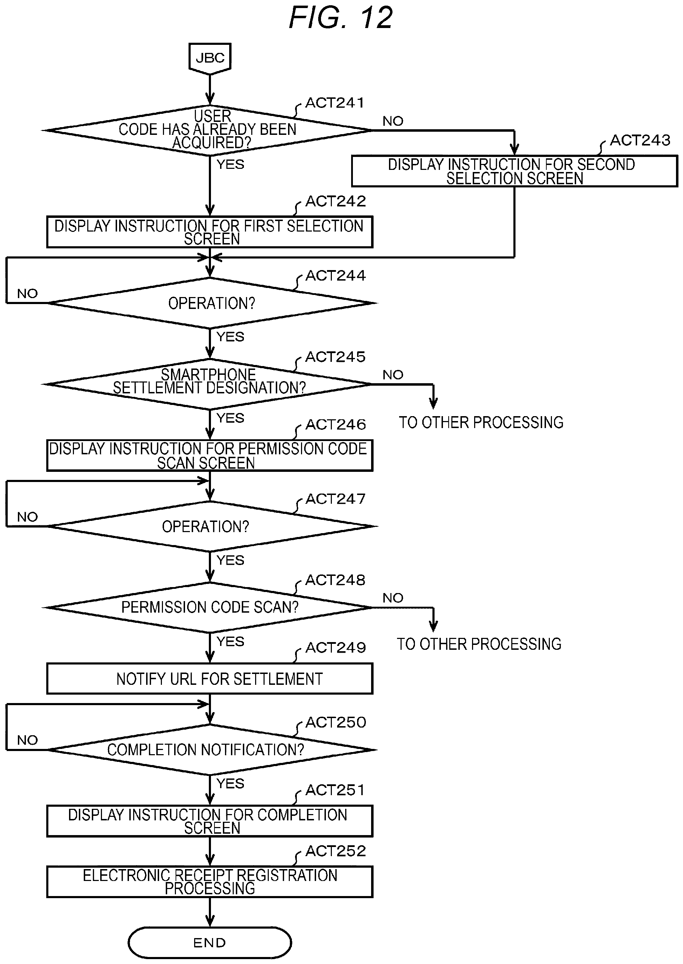

Upon finishing registering all transaction commodities, the user designates a checkout start with a predetermined operation such as tapping the button BBB in the registration screen SCB. This operation is a notification target. In the user terminal 400, the processor 401 determines YES in both of ACT 131 and ACT 132 in Fig. 9, proceeds to ACT 133, and notifies the transaction processing apparatus 100 that the operation for designating the checkout start has been performed. According to this notification, in the transaction processing apparatus 100, the processor 101 determines YES in ACT 217 in Fig. 10 and proceeds to ACT 241 in Fig. 12.

In ACT 241, the processor 101 checks whether a user code has already been acquired. For example, if a user code is set in the field FBC of the transaction data DAA, the processor 101 considers that the user code has already been acquired and determines YES and proceeds to ACT 242.

In ACT 242, the processor 101 instructs the user terminal 400 to display a first selection screen. The first selection screen is a screen permitting the user to designate smartphone settlement or checkout machine settlement.

In the user terminal 400, when the instruction data for the display instruction for the first selection screen is received, the processor 401 determines YES in ACT 134 in Fig. 9, proceeds to ACT 136, and updates the display screen of the touch panel 404 to the first selection screen. Since the screen after the update is not the completion screen, the processor 401 determines NO in ACT 137 and returns to the waiting state in ACT 131.

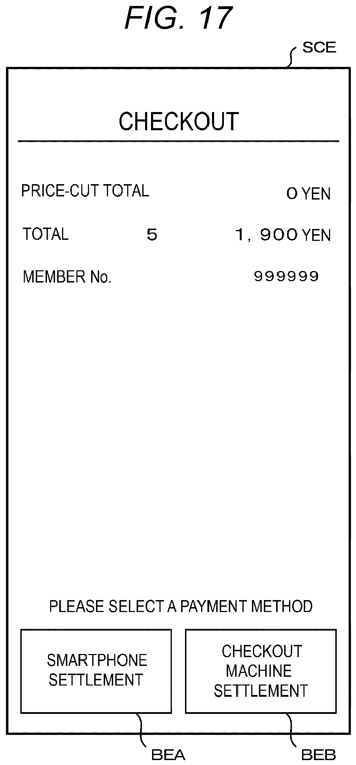

Fig. 17 is a diagram showing a first selection screen SCE.

The first selection screen SCE displays a total amount of an applied price-cut, a total number of articles of a transaction commodity, and a settlement amount, displays a user code as a character string, and displays buttons BEA and BEB. The button BEA is a softkey for receiving designation of the smartphone settlement. The button BEB is a softkey for receiving designation of the checkout machine settlement.

On the other hand, for example, if confirming that the field FBC of the transaction data DAA concerning the transaction is in the null state, the processor 101 considers that the user code has not been acquired yet, determines NO in ACT 241 in Fig. 12, and proceeds to ACT 243.

In ACT 243, the processor 101 instructs the user terminal 400 to display a second selection screen. The second selection screen is a screen for causing the user to designate the checkout machine settlement. The second selection screen is, for example, a screen obtained by changing the first selection screen SCE to disable the button BEA to, for example, not to display the button BEA or to gray out the button BEA. Note that, when a notification identifier is included in instruction data for the display instruction for the second selection screen, it is assumed that the notification identifier is, for example, notification indicating that an execution instruction for the checkout machine settlement is requested or a notification indicating that the user code has not been acquired yet.

In the user terminal 400, when the instruction data for the display instruction for the second selection screen is received, the processor 401 determines YES in ACT 134 in Fig. 9, proceeds to ACT 136, and updates the display screen of the touch panel 404 to the second selection screen. Since the screen after the update is not the completion screen, the processor 401 determines NO in ACT 137 and returns to the waiting state in ACT 131.

In the user terminal 400, when the operation for designating the checkout start is performed, the processor 401 may execute the processing in ACT 241 to ACT 243 explained above in place of the processor 101. In this case, in the transaction processing apparatus 100, for example, when determining YES in ACT 217 in Fig. 10, the processor 101 proceeds to ACT 244 in Fig. 12.

When operating the user terminal 400 and performing settlement using the online settlement service, the user performs a predetermined operation for designating the smartphone settlement, for example, tapping the button BEA displayed on the first selection screen SCE. When performing settlement using the checkout machine 200, the user performs a predetermined operation for designating checkout machine settlement, for example, tapping the button BEB displayed on the first selection screen SCE or the second selection screen. These operations are each notification targets. The processor 401 determines YES in both of ACT 131 and ACT 132 in Fig. 9, proceeds to ACT 133, and notifies the transaction processing apparatus 100 that the operation for designating the smartphone settlement or the checkout machine settlement has been performed.

When finishing the display instruction in ACT 242 or ACT 243 in Fig. 12, the processor 101 proceeds to ACT 244 in both the cases.

In ACT 244, the processor 101 waits for operation to be performed in the user terminal 400. If the operation explained above is notified from the user terminal 400 to the transaction processing apparatus 100, the processor 101 determines YES and proceeds to ACT 245.

In ACT 245, the processor 101 checks whether the smartphone settlement has been designated. If not, the processor 101 determines NO, checks content of the operation, and proceeds to other processing for performing processing corresponding to the operation. As one kind of the other processing, the processor 101 confirms that the checkout machine settlement has been designated and executes processing for causing the checkout machine 200 to perform settlement processing for a price of a transaction being processed. As the other processing, another kind of processing or a plurality of kinds of processing are sometimes selectively performed. However, detailed explanation of the processing is omitted here.

As an example, the processing for causing the checkout machine 200 to perform the settlement processing is as explained below.

The processor 101 instructs the user terminal 400 to display a screen for checkout. The screen for checkout is a screen for transferring checkout processing concerning a transaction to the checkout machine 200. A barcode representing information for the checkout machine 200 to inquire the transaction processing apparatus 100 about the transaction is displayed on the screen for checkout.

In the user terminal 400, when instruction data for the display instruction for the screen for checkout is received, the processor 401 determines YES in ACT 134 in Fig. 9, proceeds to ACT 136, and updates the display screen of the touch panel 404 to the screen for checkout. Since the screen after the update is not the completion screen, the processor 401 determines NO in ACT 137 and returns to the waiting state in ACT 131.

If a plurality of checkout machines 200 are installed in the store, the user optionally selects the checkout machine 200 not in use out of the plurality of checkout machines 200 and causes a barcode scanner included in the checkout machine 200 to read a barcode displayed on the screen for checkout. Accordingly, the checkout machine 200 requests, based on information represented by the barcode read by the barcode scanner, the transaction processing apparatus 100 to transmit checkout data.

In the transaction processing apparatus 100, when receiving the request for checkout data, the processor 101 transmits, to the checkout machine 200 at a request source, checkout data for causing the checkout machine 200 to perform requested transaction settlement.

According to the checkout data transmitted from the transaction processing apparatus 100 in this way, while displaying a screen as appropriate, the checkout machine 200 receives operation of the user concerning the checkout and, at the same time, executes processing for checking out the transaction based on the checkout data. The processing of the checkout machine 200 may be, for example, the same processing as performed in a checkout machine of an existing POS system.

In the transaction processing apparatus 100, when proceeding from ACT 244 to ACT 245 in Fig. 12 in response to the operation for designating the smartphone settlement being performed at the user terminal 400 while the first selection screen SCE is displayed, the processor 101 determines YES in ACT 245 and proceeds to ACT 246. Note that, when the processor 101 instructs the display of the second selection screen in ACT 243 because a user code is not acquired, the smartphone settlement is not designated and the processor 101 does not proceed to ACT 246.

In ACT 246, the processor 101 instructs the user terminal 400 to display a permission code scan screen. The permission code scan screen is a screen for scanning a barcode representing a permission code. Note that, when a notification identifier is included in instruction data for the display instruction for the permission code scan screen, it is assumed that the notification identifier is, for example, a notification identifier for identifying notification indicating that input of a permission code is requested.

In the user terminal 400, when instruction data for the display instruction for the permission code scan screen is received, the processor 401 determines YES in ACT 134 in Fig. 9, proceeds to ACT 136, and updates the display screen of the touch panel 404 to the permission code scan screen. Since the screen after the update is not the completion screen, the processor 401 determines NO in ACT 137 and returns to the waiting state in ACT 131.

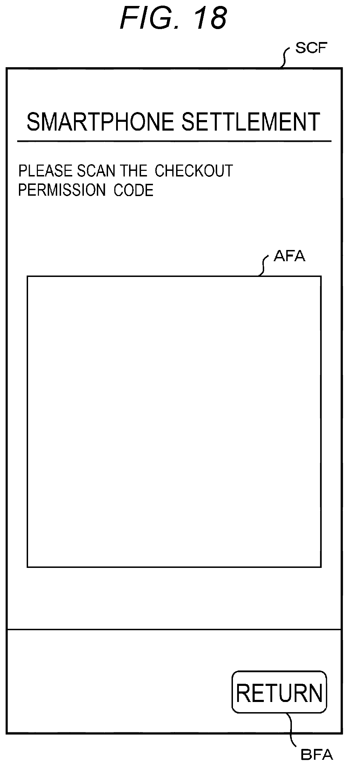

Fig. 18 is a diagram showing a permission code scan screen SCF.

The permission code scan screen SCF includes a display area AFA and a button BFA. The display area AFA is an area for displaying an image obtained by the camera 405. The button BFA is a softkey for the user to declare that the smartphone settlement is stopped.

In the user terminal 400, in displaying the permission code scan screen SCF, the processor 401 starts the camera 405 and superimposes and displays an image obtained by the camera 405 in the display area AFA.

A two-dimensional barcode representing a permission code for permitting a predetermined smartphone settlement method is posted in a checkout area (specific region or zone) in the store. The posting of the two-dimensional barcode can be performed by installation of a signboard, posting of a printed sheet, or the like. In this context, the checkout area is a specified store area in which settlement using the online settlement service is permitted. The checkout area may be set as appropriate for each store by a manager, designer, or the like of the store. The permission code may be different for each store or may be common to a plurality of stores. In some examples, a one-dimensional barcode representing the permission code may be posted instead of a two-dimensional barcode.

The user moves to the checkout area and, then, operates the user terminal 400 such that the two-dimensional barcode posted is pictured in the display area AFA. The processor 401 analyzes the image obtained by the camera 405 and attempts to read the two-dimensional barcode. When the two-dimensional barcode is read, this operation is a notification target. The processor 401 determines YES in both of ACT 131 and ACT 132 in Fig. 9, proceeds to ACT 133 and notifies the transaction processing apparatus 100 that a scan operation has been performed providing barcode data represented by the two-dimensional barcode. The signboard, the printed sheet, or the like used for the posting of the two-dimensional barcode at the checkout area corresponds to a medium serving as an acquisition source of the permission code by the user terminal 400.

Upon finishing the display instruction in ACT 246 in Fig. 12, the processor 101 proceeds to ACT 247.

In ACT 247, the processor 101 waits for an operation to be performed at the user terminal 400. If operation content is notified from the user terminal 400, the processor 101 determines YES and proceeds to ACT 248.

In ACT 248, the processor 101 checks whether scan of the permission code has been performed. If not, the processor 101 determines NO, checks content of the operation, and proceeds to other processing for performing processing corresponding to the operation. As one kind of the other processing, for example, the processor 101 confirms that operation for designating stop of the smartphone settlement, for example, tapping the button BFA has been performed, returns to ACT 242, and restores the display screen of the touch panel 404 of the user terminal 400 to the first selection screen SCE. As one kind of the other processing, for example, the processor 101 confirms that scan operation of a barcode not representing a permission code has been performed, performs error display, and, thereafter, returns to ACT 246, and restores the display screen of the touch panel 404 in the user terminal 400 to the permission code scan screen SCF. The error display is, for example, screen display for notifying the operator that the smartphone settlement cannot be performed unless the permission code is scanned. As the other processing, another kind of processing or a plurality of kinds of processing are sometimes selectively performed. However, detailed explanation of the processing is omitted here.

If the operation notification involving the notification of the barcode data representing the permission code has been performed, the processor 101 considers that the permission code has been scanned, determines YES in ACT 248, and proceeds to ACT 249. At this time, the processor 101 detects that the user terminal 400 is in an allowable state in which the user terminal 400 is located in a checkout area set as an allowable range. The processor 101 executes the information processing based on the transaction processing program PRA in this way, whereby the computer including the processor 101 functions as detecting means.

In ACT 249, the processor 101 accesses the online settlement service on the Web and notifies the user terminal 400 of a URL (uniform resource locator) for settlement for causing the user terminal 400 to perform settlement of a transaction. The processor 101 includes, in the URL for settlement, for example, an address for accessing a Web server that provides the online settlement service (hereinafter referred to as settlement server) and settlement data concerning the transaction. For example, the processor 101 makes it possible to determine a settlement amount and a transaction code concerning the transaction from the settlement data. For example, the processor 101 makes it possible to determine, from the settlement data, an identifier of a member store of the online settlement service to which the store where the transaction is performed belongs. For example, the processor 101 makes it possible to determine, from the settlement data, an identifier for identifying the transaction processing apparatus 100 in the settlement server. Note that it depends on the specifications of the online settlement service what kind of information the processor 101 is capable of determining from the settlement data. Apart of the information to be included in the settlement data may be sent from the user terminal 400 or the transaction processing apparatus 100 to the settlement server by separate communication without being included in the settlement data.

In the user terminal 400, when receiving the notification of the URL for settlement, the processor 401 determines YES in ACT 135 in Fig. 9 and proceeds to ACT 138.

In ACT 138, the processor 401 starts browser processing according to the browser program PRE included in the user terminal 400. Note that, if the browser processing has already been started, the processor 401 gets through the processing.

In ACT 139, the processor 401 transfers the URL for settlement notified from the transaction processing apparatus 100 to the started browser processing explained above.

The notifying the URL for settlement to the user terminal 400 in this way is equivalent to processing for transferring a settlement amount to the user terminal 400 that performs information processing for performing settlement using the online settlement service. The processor 101 starts this processing only when it is detected that the user terminal 400 is in a state in which the user terminal 400 is located in the checkout area. The processor 101 executes the information processing based on the transaction processing program PRA in this way, whereby the computer including the processor 101 functions as processing means.

In the browser processing, the processor 401 accesses the settlement server based on the URL for settlement transferred from the user terminal processing. Thereafter, in the browser processing, the processor 401 performs settlement using the online settlement service according to an instruction from the settlement server and operation by the user. Note that a procedure of the settlement performed using the online settlement service may be, for example, a procedure known in an existing online settlement service. Explanation of the procedure is omitted here.

When completing the settlement, the settlement server notifies the completion of the settlement to, for example, the transaction processing apparatus 100 identified by the identifier determined from settlement data included in the URL for settlement used for the access while involving notification of a transaction identifier determined from the URL for settlement.

In the transaction processing apparatus 100, the processor 101 notifies the URL for settlement in ACT 249 in Fig. 12 and, thereafter, proceeds to ACT 250.

In ACT 250, the processor 101 waits for completion notification. When the completion of the settlement is notified from the settlement server, the processor 101 determines YES and proceeds to ACT 251.

In ACT 251, the processor 101 instructs the user terminal 400 to display a completion screen. The completion screen is a screen for causing the user to recognize that the transaction is completed. When a notification identifier is included in instruction data for the display instruction for the completion screen, it is assumed that the notification identifier is, for example, a notification identifier for identifying the notification indicating that the settlement is completed.

In the user terminal 400, when instruction data for the display instruction for the completion screen is received, the processor 401 determines YES in ACT 134 in Fig. 9, proceeds to ACT 136, and updates the display screen of the touch panel 404 to the completion screen. Since the screen after the update is the completion screen, the processor 401 determines YES in ACT 137 and proceeds to other processing. As one kind of the other processing, for example, the processor 401 returns to ACT 111 in Fig. 8 in response to operation for, for example, tapping a softkey displayed on the completion screen being performed. As the other processing, another kind of processing or a plurality of kinds of processing are sometimes selectively performed. However, detailed explanation of the processing is omitted here.

In ACT 252 in Fig. 12, the processor 101 performs electronic receipt registration processing. That is, the processor 101 sends various data such as a user code, a list of transaction commodities, and a result of settlement to the electronic receipt server 600 in order to make it possible to view content of a transaction of this time in the electronic receipt service. The processor 101 executes information processing based on the transaction processing program PRA in this way, whereby the computer including the processor 101 functions as transmitting means.

Then, the electronic receipt server 600 saves the acquired data in the transaction database and makes it possible to view the content of the transaction with the electronic receipt service. The electronic receipt registration processing may be the same as in an existing electronic receipt service. Additional explanation of the electronic receipt registration processing is omitted here. The data transmitted to the electronic receipt server 600 by the processor 101 can be based on the specifications of the electronic receipt service.

Thereafter, the processor 101 ends the smartphone POS processing.

When the cart terminal 500 is in a started state, the processor 501 is executing cart terminal processing according to the cart terminal program PRF.

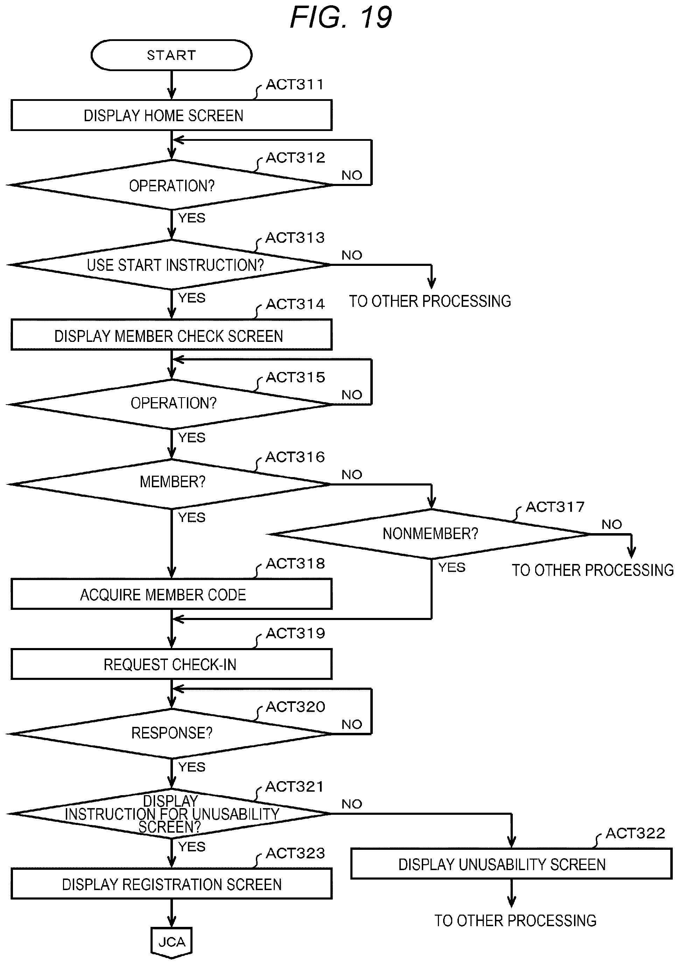

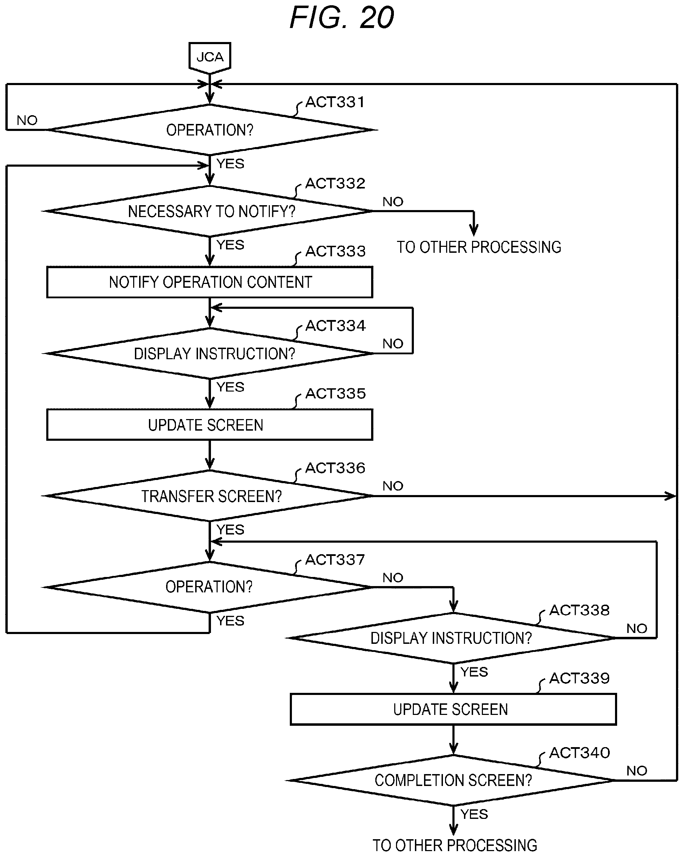

Fig. 19 and Fig. 20 are flowcharts of the cart terminal processing.

In ACT 311 in Fig. 19, the processor 501 causes the touch panel 504 to display a home screen. The home screen is a screen for causing the operator to designate a function that should be executed out of various functions realized by the cart terminal processing. The home screen displays a softkey for receiving an instruction for a use start by the user.

The user instructs a use start with a predetermined operation such as tapping a softkey displayed on the home screen displayed on the touch panel 504 of the cart terminal 500 when in an unused state.

In ACT 312, the processor 501 waits for some operation by the operator to be performed in a state in which the home screen is displayed. If some operation by the operator is detected by, for example, the touch panel 504, the processor 501 determines YES and proceeds to ACT 313.

In ACT 313, the processor 501 checks whether the performed operation is operation for the instruction for the use start. If not, the processor 101 determines NO, checks content of the operation, and proceeds to other processing for performing processing corresponding to the operation. As one kind of the other processing, the processor 101 performs, for example, processing for maintenance according to operation by an authorized person such as a store clerk. As the other processing, another kind of processing or a plurality of kinds of processing are sometimes selectively performed. However, detailed explanation of the processing is omitted here.

If the operation for the instruction for the use start has been performed, the processor 501 determines YES in ACT 313 and proceeds to ACT 314.

In ACT 314, the processor 501 causes the touch panel 504 to display a member check screen. The member check screen is a screen for inquiring the user whether the user is a member. The member check screen displays a softkey for the user to declare that the user is a member and a softkey for the user to declare that the user is a nonmember.

The user declares that the user is a member with a predetermined operation such as tapping a softkey for declaring that the user is a member. Alternatively, the user may declare that the user is a nonmember with a predetermined operation such as tapping a softkey for declaring that the user is a nonmember.

In ACT 315, the processor 501 waits for some operation by the user to be performed. After some operation by the user has been performed, the processor 501 determines YES and proceeds to ACT 316.

In ACT 316, the processor 501 checks whether the user has declared to be a member. If not, the processor 501 determines NO and proceeds to ACT 317.

In ACT 317, the processor 501 checks whether the user has declared to be a nonmember. If not, the processor 501 determines NO, and proceeds to other processing. As one kind of the other processing, the processor 501 confirms that the operation for instructing to cancel the use start has been performed and returns to ACT 311. As other processing, another kind of processing or a plurality of kinds of processing may be performed.

If the operation for declaring that the user is a member has been performed, the processor 501 determines YES in ACT 316 and proceeds to ACT 318.

In ACT 318, the processor 501 acquires a member code. For example, the processor 501 extracts a member code from barcode data represented by a barcode scanned by the scanner 505 from a member card held over the scanner 505 by the user. The processor 501 attempts to acquire a user code for the user identified by the member code. Note that the member code and the user code may be the same in some examples. In such a case, the acquisition of the member code may be regarded as the acquisition of the user code. Alternatively, if a user code is correlated with the acquired member code in a database or the like, the processor 501 may acquire the user code.

Thereafter, the processor 501 proceeds to ACT 319. Note that, if confirming that the operation for declaring that the user is a nonmember has been performed, the processor 501 determines YES in ACT 317, gets through ACT 318, and proceeds to ACT 319.

In ACT 319, the processor 501 requests the transaction processing apparatus 100 to perform check-in. For example, the processor 501 delivers request data for the request for check-in from the wireless communication unit 506 to the communication network 2 while addressing the request data to the transaction processing apparatus 100. The processor 501 includes, in the request data explained above, check-in data stored in the auxiliary storage unit 503 and a terminal code of the cart terminal 500. Note that the terminal code is stored in, for example, the auxiliary storage unit 503. If succeeding in acquiring a user code in ACT 318, the processor 501 includes the user code in the request data as well. As the check-in data, for example, the same check-in data as the check-in data represented by the check-in code is written in the auxiliary storage unit 503 in advance. However, the check-in data written in the auxiliary storage unit 503 may be partially different from the check-in data represented by the check-in code. The terminal code is given to each of a plurality of cart terminals 500, which are used in the same store, and written in the auxiliary storage unit 503 such that the each of the cart terminals 500 can be identified and the terminal code does not overlap the terminal code of the user terminal 400. As the terminal code of the cart terminal 500, for example, numerical values of "1" to "999" are used.

When the request data is transmitted to the transaction processing apparatus 100 by the communication network 2, in the transaction processing apparatus 100, the communication unit 104 receives the request data and temporarily saves the request data in the main storage unit 102 or the auxiliary storage unit 103.

When the request data delivered from the cart terminal 500 is received by the transaction processing apparatus 100 in this way, the processor 101 starts transaction processing for a cart POS service (hereinafter referred to as cart POS processing) according to the transaction processing program PRA. Note that the smartphone POS processing and the cart POS processing may be respectively described in different application programs.

If the processor 101 is already executing cart POS processing targeting a transaction concerning a different user, the processor 101 starts new cart POS processing as processing of a thread different from the cart POS processing. If the processor 101 is already executing the smartphone POS processing explained above, the processor 101 starts cart POS processing as processing of a thread different from the smartphone POS processing. That is, the processor 101 sometimes execute pluralities of kinds of smartphone POS processing and cart POS processing in parallel. However, the following explanation focuses on only processing of a transaction concerning one user. Consequently, "cart terminal 500" in the following explanation indicates one cart terminal 500 used by the user for the focused cart POS processing. "Transaction" in the following explanation indicates a transaction set as a target of the focused processing.

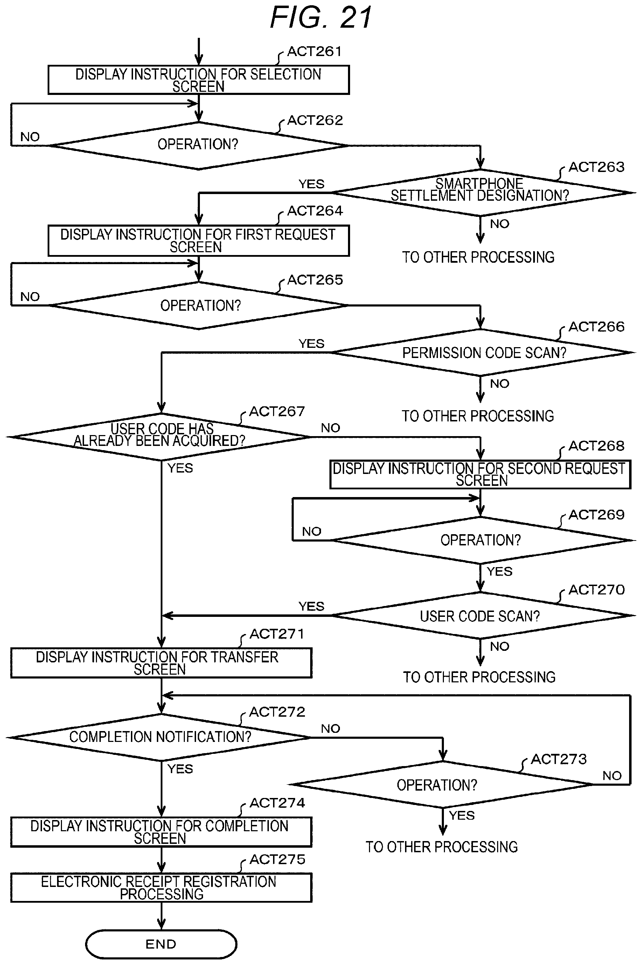

Fig. 21 is a flowchart of the cart POS processing.

In the cart POS processing as well, the processor 101 performs, in the same manner, the kinds of processing shown in Fig. 10 and Fig. 11 in the smartphone POS processing. However, a terminal used as a user interface is the cart terminal 500 in the cart POS processing. The various screens displayed on the touch panel 504 of the cart terminal 500 may be changed for the cart terminal 500. For example, if the cart terminal 500 is attached to a shopping cart in a state in which the touch panel 504 is laterally long, the longitudinally long various screens explained above are changed to be adapted to the laterally long touch panel 504. For example, if a screen size of the touch panel 504 is larger than a screen size of the touch panel 504, the screen size of the touch panel 504 is changed to display, in one screen, more information than information displayed on the various screens explained above. However, the functions explained above about the various screens are not changed.

In the cart terminal 500, after requesting check-in in ACT 319 in Fig. 19, the processor 501 executes ACT 320 to ACT 323 and ACT 311 to ACT 333 in Fig. 20 in the same manner as ACT 118 to ACT 121 in Fig. 8 and ACT 131 to ACT 133 in Fig. 9.

After ACT 333, the processor 501 proceeds to ACT 334.

In ACT 334, the processor 501 waits for a display instruction. When instruction data transmitted from the transaction processing apparatus 100 in order to instruct display of some screen is received by the wireless communication unit 506, the processor 501 determines YES and proceeds to ACT 335.

In ACT 335, the processor 501 updates the display screen on the touch panel 504 according to the instruction.

In ACT 336, the processor 501 checks whether the display screen after the update is a transfer screen. If the display screen is updated to a screen other than the transfer screen, the processor 501 determines NO and returns to the waiting state in ACT 331. That is, the processor 501 transitions to a state for waiting for an operation concerning the screen after the update.

In the transaction processing apparatus 100, the processor 101 proceeds to ACT 261 in Fig. 21 in response to being notified from the cart terminal 500 that an operation for instructing the checkout start has been performed.

In ACT 261, the processor 101 instructs the cart terminal 500 to display a selection screen. The selection screen is, like the first selection screen, a screen for causing the user to designate which of the smartphone settlement and the checkout machine settlement is performed.

In the cart terminal 500, when instruction data for a display instruction for the selection screen is received by the wireless communication unit 506, the processor 501 determines YES in ACT 334 in Fig. 20, proceeds to ACT 335, and updates the display screen of the touch panel 504 to the selection screen. Since the screen after the update is not the transfer screen, the processor 501 determines NO in ACT 366 and returns to the waiting state in ACT 331. However, the processor 501 may cause, without receiving the display instruction from the processor 101, the touch panel 504 to display the selection screen. In this case, for example, the processor 101 omits the ACT 261 and proceeds to ACT 262.

To perform the settlement using the online settlement service, the user performs a predetermined operation for designating the smartphone settlement such as tapping a button displayed for smartphone settlement on the selection screen. If performing the settlement using a checkout machine 200, the user performs a predetermined operation for designating checkout machine settlement such as tapping a button displayed for checkout machine settlement on the selection screen. These operations are notification targets. The processor 501 determines YES in both of ACT 331 and ACT 332 in Fig. 20, proceeds to ACT 333, and notifies the transaction processing apparatus 100 that an operation for designating the smartphone settlement or the checkout machine settlement has been performed.

In ACT 262 in Fig. 21, the processor 101 waits for an operation to be performed at the cart terminal 500. If any notification target operation is notified from the cart terminal 500 to the transaction processing apparatus 100, the processor 101 determines YES and proceeds to ACT 263.

In ACT 263, the processor 101 checks whether the smartphone settlement has been designated. If not, the processor 101 determines NO, checks content of the operation, and proceeds to other processing. As one kind of other processing in this context, the processor 101 confirms that checkout machine settlement has been designated and executes processing for causing the checkout machine 200 to perform settlement processing for the transaction being processed. As the other processing, another kind of processing or a plurality of kinds of processing are sometimes selectively performed.

In the transaction processing apparatus 100, when proceeding from ACT 262 to ACT 263 in response to the operation for designating the smartphone settlement being performed at the cart terminal 500, the processor 101 determines YES in ACT 263 and proceeds to ACT 264.

In ACT 264, the processor 101 instructs the cart terminal 500 to display a first request screen. The first request screen is a screen for requesting the user to cause the cart terminal 500 to scan a permission code. When a notification identifier is included in instruction data for the display instruction for the first request screen, it is assumed that the notification identifier is, for example, a notification identifier for identifying notification indicating that input of the permission code is requested.

Note that, in the cart terminal 500, when an operation for designating the smartphone settlement is performed on the selection screen, the processor 501 may cause the touch panel 504 to display the first request screen without receiving the display instruction from the transaction processing apparatus 100. In this case, in the transaction processing apparatus 100, the processor 101 does not execute ACT 264.

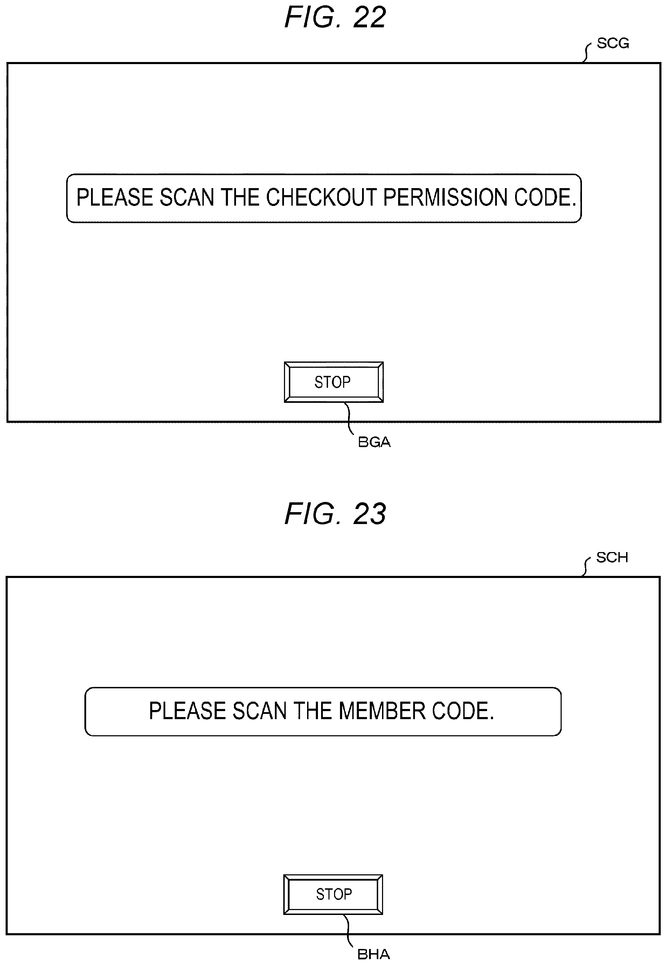

Fig. 22 is a diagram showing a first request screen SCG.

The first request screen SCG displays a character message for requesting the user to cause the cart terminal 500 to scan the permission code. The first request screen SCG displays a button BGA. The button BGA is a softkey for receiving an instruction to stop the smartphone settlement.

The user operates the cart terminal 500 to cause the scanner 505 to read the permission code posted in the checkout area. If a two-dimensional barcode is read by the scanner 505, this operation is a notification target. The processor 501 determines YES in both of ACT 331 and ACT 332 in Fig. 20, proceeds to ACT 333, and notifies the transaction processing apparatus 100 that the scan operation has been performed while involving notification of barcode data represented by the two-dimensional barcode.

When finishing the display instruction in ACT 264 in Fig. 21, the processor 101 proceeds to ACT 265.

In ACT 265, the processor 101 waits for an operation to be performed at the cart terminal 500. When operation content is notified from the cart terminal 500, the processor 101 determines YES and proceeds to ACT 266.

In ACT 266, the processor 101 checks whether the permission code has been scanned. If not, the processor 101 determines NO, checks content of the operation, and proceeds to other processing. As one kind of the other processing, for example, the processor 101 confirms that an operation for designating stop of the smartphone settlement, for example, tapping the button BGA has been performed, returns to ACT 261, and restores the display screen of the touch panel 504 of the cart terminal 500 to the selection screen. As one kind of the other processing, the processor 101 confirms that a scan operation on a barcode not representing the permission code has been performed and performs error display and, thereafter, returns to ACT 264 and restores the display screen of the touch panel 504 of the cart terminal 500 to the first request screen SCG. The error display is, for example, a screen display for notifying the operator that the smartphone settlement cannot be performed unless the permission code is scanned. As the other processing, another kind of processing or a plurality of kinds of processing are sometimes selectively performed.

If an operation notification involving notification of acquisition of barcode data representing the permission code is performed, the processor 101 considers that the permission code has been scanned, determines YES in ACT 266, and proceeds to ACT 267. At this time, the processor 101 detects that the cart terminal 500 is in an allowable state (the cart terminal 500 is located in a checkout area serving as an allowable range). The processor 101 executes the information processing based on the transaction processing program PRAin this way, whereby the computer including the processor 101 functions as detecting means.

In ACT 267, the processor 101 checks whether a user code has already been acquired. As a part of an operation for a use start of the cart terminal 500, if check-in data cannot be acquired because a user code is not input to the cart terminal 500 and a user code is not delivered together with check-in data from the cart terminal 500, the processor 101 determines NO and proceeds to ACT 268.

In ACT 268, the processor 101 instructs the cart terminal 500 to display a second request screen. The second request screen is a screen for requesting the user to cause the cart terminal 500 to scan a user code. When a notification identifier is included in instruction data for the display instruction for the second request screen, it is assumed that the notification identifier is, for example, a notification identifier for identifying notification indicating that input of a user code is requested.

In the cart terminal 500, when the instruction data for the display instruction for the second request screen is received by the wireless communication unit 506, the processor 501 determines YES in ACT 334 in Fig. 20, proceeds to ACT 335, and updates the display screen of the touch panel 504 to the second request screen. Since the screen after the update is not the transfer screen, the processor 501 determines NO in ACT 366 and returns to the waiting state in ACT 331.

Fig. 23 is a diagram showing a second request screen SCH.

The second request screen SCH displays a character message for requesting the user to cause the cart terminal 500 to scan a user code. Note that, in the character message, the user code is represented as "member code". The second request screen SCH displays a button BHA. The button BHA is a softkey for receiving an instruction to stop the smartphone settlement.

A user causes an information communication terminal such as a smartphone owned by the user to display a barcode representing a user code on a screen of the information communication terminal and causes the scanner 505 of the cart terminal 500 to scan the barcode. If the barcode is read by the scanner 505, this operation is a notification target. The processor 501 determines YES in both of ACT 331 and ACT 332 in Fig. 20, proceeds to ACT 333, and notifies the transaction processing apparatus 100 that the scan operation has been performed while involving notification of barcode data represented by the barcode.

When finishing the display instruction in ACT 268 in Fig. 21, the processor 101 proceeds to ACT 269.

In ACT 269, the processor 101 waits for an operation to be performed in the cart terminal 500. If operation content is notified from the cart terminal 500, the processor 101 determines YES and proceeds to ACT 270.

In ACT 270, the processor 101 checks whether a scan of the user code has been performed. If not, the processor 101 determines NO, checks content of the operation, and proceeds to other processing. As one kind of the other processing, for example, the processor 101 confirms that an operation for designating stop of the smartphone settlement, for example, tapping the button BHA has been performed, returns to ACT 261, and restores the display screen of the touch panel 504 of the cart terminal 500 to the selection screen. As one kind of the other processing, for example, the processor 101 confirms that a scan operation of a barcode not representing the user code has been performed and performs error display for notifying that the scanned barcode is wrong and, thereafter, returns to ACT 268 and restores the display screen of the touch panel 504 in the cart terminal 500 to the second request screen SCH. As the other processing, another kind of processing or a plurality of kinds of processing are sometimes selectively performed. However, detailed explanation of the processing is omitted here.

If an operation notification with barcode data representing the user code is performed, the processor 101 considers that the user code has been scanned, determines YES in ACT 270, and proceeds to ACT 271. Note that, when confirming that the user code has already been acquired and determining YES in ACT 267, the processor 101 proceeds to ACT 271 without performing ACT 268 to ACT 270.

In ACT 271, the processor 101 instructs the cart terminal 500 to display a transfer screen. The transfer screen is a screen for transferring settlement performed using the online settlement service to another information communication terminal. As the other information communication terminal, typically, a smartphone is used.

In the cart terminal 500, when instruction data for the display instruction for the transfer screen is received by the wireless communication unit 506, the processor 501 determines YES in ACT 334 in Fig. 20, proceeds to ACT 335, and updates the display screen of the touch panel 504 to the transfer screen.

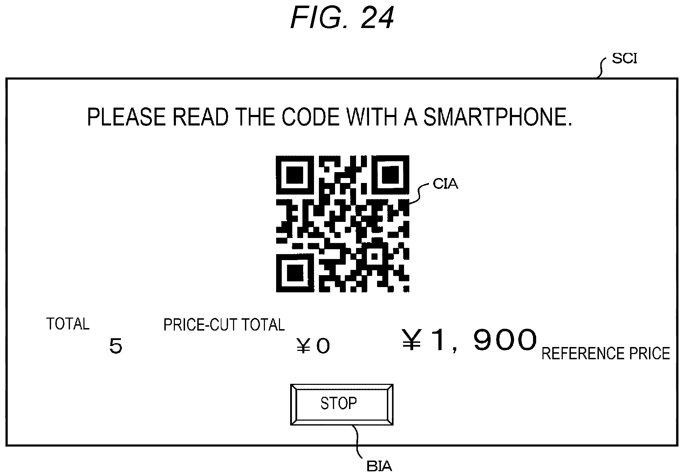

Fig. 24 is a diagram showing a transfer screen SCI.

The transfer screen SCI displays a total amount of an applied price-cut, a total number of articles of a transaction commodity, and a settlement amount, displays a user code with a character string, and displays a two-dimensional barcode CIA and a button BIA. The transfer screen SCI displays a character message for requesting the user to cause an information communication terminal used for settlement to read the two-dimensional barcode CIA. The two-dimensional barcode CIA represents transfer data including a URL for settlement and including a command for requesting to execute Web access using the URL for settlement. The button BIA is a softkey for receiving an instruction to stop the smartphone settlement. For example, the processor 101 generates the URL for settlement in the same manner as the URL for settlement notified to the user terminal 400 in ACT 249 in Fig. 12.

A user causes an information communication terminal such as a smartphone owned by the user to read the two-dimensional barcode CIA using a barcode reader function of the information communication terminal. Accordingly, the information communication terminal accesses, with a browser function, a settlement server based on the URL for settlement included in the transfer data represented by the two-dimensional barcode CIA. Thereafter, the information communication terminal performs settlement with the browser function according to an instruction from the settlement server and operation(s) by the user using the online settlement service. Note that a procedure of the settlement using the online settlement service may be, for example, a procedure known in existing online settlement services.

Causing the cart terminal 500 to display the transfer screen SCI in this way is equivalent to the processing for causing the information communication terminal to perform settlement using an online settlement service and transferring a settlement amount. The processor 101 starts the processing only when it is detected that the cart terminal 500 is located in the checkout area. The processor 101 executes the information processing based on the transaction processing program PRA in this way, whereby the computer including the processor 101 functions as processing means.

In the transaction processing apparatus 100, after performing the display instruction for the transfer screen in ACT 271 in Fig. 21, the processor 101 proceeds to ACT 272.

In ACT 272, the processor 101 checks whether completion notification has been performed. If failing in confirming a relevant event, the processor 101 determines NO and proceeds to ACT 273.

In ACT 273, the processor 101 checks whether some operation by the user has been performed. If not, the processor 101 determines NO and returns to ACT 272.

In this way, in ACT 272 and ACT 273, the processor 101 waits for the completion notification or the operation.

In the cart terminal 500, if proceeding to ACT 366 after updating the display screen to the transfer screen in ACT 335 in Fig. 20, the processor 501 determines YES and proceeds to ACT 337.

In ACT 337, the processor 501 checks whether some operation by the user has been performed. If not, the processor 501 determines NO and proceeds to ACT 338.

In ACT 338, the processor 501 checks whether a display instruction has been performed. If not, the processor 501 determines NO and returns to ACT 337.

In this way, in ACT 337 and ACT 338, the processor 501 waits for an operation or a display instruction.

When an operation such as tapping the button BIA displayed on the transfer screen is performed by the user and the operation is detected by the touch panel 504, the processor 501 determines YES in ACT 337, transitions to ACT 332, and repeats the processing in ACT 332 and subsequent acts in the same manner as explained above. The predetermined operation for an instruction to stop the smartphone settlement (for example, tapping the button BIA) is a notification target. The processor 501 determines YES in both of ACT 331 and ACT 332 in Fig. 20, proceeds to ACT 333, and notifies the operation to the transaction processing apparatus 100.

In the transaction processing apparatus 100, if the operation is notified from the cart terminal 500 in this way, the processor 101 determines YES in ACT 273 in Fig. 21 and proceeds to other processing for performing processing corresponding to content of the notified operation. As one kind of the other processing, for example, the processor 101 confirms that the operation for designating stop of the smartphone settlement has been performed, returns to ACT 261, and restores the display screen of the touch panel 504 of the cart terminal 500 to the selection screen. As the other processing, another kind of processing or a plurality of kinds of processing are sometimes selectively performed.

Upon completing the settlement processing started by being accessed based on the URL for settlement, the settlement server notifies the completion of the settlement to the transaction processing apparatus 100.

In the transaction processing apparatus 100, when the completion is notified in this way, the processor 101 determines YES in ACT 272 in Fig. 21 and proceeds to ACT 274.

In ACT 274, the processor 101 instructs the cart terminal 500 to display a completion screen. The completion screen is a screen for causing the user to recognize that a transaction is completed. When a notification identifier is included in instruction data for the display instruction for the completion screen, it is assumed that the notification identifier is, for example, a notification identifier for identifying notification indicating that the settlement is completed.

In ACT 275, the processor 101 performs the electronic receipt registration processing in the same manner as in ACT 252 in Fig. 12.

Thereafter, the processor 101 ends the cart POS processing.

In the cart terminal 500, when the instruction data for the display instruction is received while the touch panel 504 is displaying the transfer screen, the processor 501 determines YES in ACT 338 in Fig. 20 and proceeds to ACT 339.

In ACT 339, the processor 501 updates the display screen on the touch panel 504 according to the instruction by the instruction data. If the display of the completion screen is instructed, the processor 501 updates the screen of the touch panel 504 to the completion screen.

In ACT 340, the processor 501 checks whether the display screen after the update is the completion screen. If the display screen is updated to the completion screen, the processor 501 determines YES and proceeds to other processing. As one kind of the other processing, the processor 501 returns to ACT 311 in Fig. 19 in response to an operation such as a tapping of the softkey displayed on the completion screen being performed. As the other processing, another kind of processing or a plurality of kinds of processing are sometimes selectively performed.

Note that, in some cases, display of a screen other than the completion screen is instructed when the touch panel 504 is displaying the transfer screen, for example, such as when the stop of the smartphone settlement is instructed. In this case, the processor 501 determines NO in ACT 340 and transitions to the waiting state in ACT 331.

When the smartphone settlement is allowed anywhere in the store, settled commodities and unsettled commodities may be mixed in the commodities carried by the user in the store. Therefore, inconveniences in store operation are likely to occur, for example, it can be difficult for a store clerk or the like to distinguish which commodity has been settled and which commodity remains unsettled.

However, the transaction processing apparatus 100 allows the smartphone settlement using the online settlement service only when the user terminal 400 or the cart terminal 500 is in the allowable state in which the user terminal 400 or the cart terminal 500 is located in the checkout area. Therefore, for example, since it is possible to prevent a situation in which the settled commodities are carried in the store mixed with unsettled commodities, it is possible to prevent the inconveniences in the store operation while still allowing the use of the online settlement service.

The transaction processing apparatus 100 detects that the user terminal 400 or the cart terminal 500 is in the allowable state when the permission code posted (as a two-dimensional barcode) in the checkout area is scanned by the user terminal 400 or the cart terminal 500. Therefore, it can be unnecessary to provide special electronic equipment for this detection. It is thus possible to more easily realize the detection.

If failing in acquiring the user code, the transaction processing apparatus 100 does not allow smartphone settlement. Consequently, when some deficiency occurs concerning the smartphone settlement, it is possible to specify the user and it is possible to appropriately cope with the deficiency.

As the result that the transaction processing apparatus 100 acquires, concerning the transaction in which the smartphone settlement is performed, the user code for using the electronic receipt service, it is possible to provide, to the user, using the electronic receipt service, a receipt that cannot be issued by performing the smartphone settlement.

Various modified implementations of this embodiment are possible.

The user terminal 400 or the cart terminal 500 may be caused to acquire the permission code using proximity wireless communication or the like.

A state in which the user terminal 400 or the cart terminal 500 can perform wireless communication with a wireless communication apparatus provided to have the checkout area as a communicable range may be set as the allowable state.

The smartphone settlement may be allowed even if the user code is not successfully acquired.

In the user terminal 400 (or the cart terminal 500), the processor 401 (or processor 501) may execute a part or all of the processing otherwise described as being performed by the processor 101 in the transaction processing apparatus 100. For example, the transaction data may be saved in the auxiliary storage unit 403 or 503. The processor 401 or 501 may perform the update of the transaction data. In this case, the registering means is realized by the information processing by the processor 401 or 501.

A part or all of the functions realized by the processor 101 with information processing can also be realized by hardware, such as a logic circuit, that executes information processing not based on a program. Each of the functions explained above can also be realized by combining software control with the hardware such as the logic circuit.

Several embodiments of the present disclosure are explained above. However, these embodiments are presented as examples and are not intended to limit the scope of the disclosure. These new embodiments can be implemented in other various forms. Various omissions, substitutions, and changes of the embodiments can be made in a range not departing from the gist of the disclosure. These embodiments and modifications thereof are included in the scope and the gist of the disclosure and are included in the disclosures described in the claims and a scope of equivalents of the disclosures.

## Claims

1. A transaction processing apparatus (100), comprising:
a storage unit ;
a communication interface (2); and
a processor (101) configured to:
register a commodity in a transaction based on commodity information sent from a user terminal via the communication interface;
determine whether the user terminal is located in a predetermined area in a store; and
execute processing for permitting a user of the user terminal to settle the transaction using an online settlement service via the user terminal only when the user terminal is determined to be located in the predetermined area.

2. The transaction processing apparatus according to claim 1, wherein the processor determines the user terminal is located in the predetermined area upon receiving a predetermined permission code from the user terminal via the communication interface.

3. The transaction processing apparatus according to claim 1 or 2, wherein the processor is further configured to acquire a user identifier from the user terminal, and the user of the user terminal is permitted to use the online settlement service only if the user identifier is acquired from the user terminal.

4. The transaction processing apparatus according to claim 3, wherein the processor is further configured to transmit a list of registered commodities in the transaction to an electronic receipt server associated with the acquired user identifier.

5. The transaction processing apparatus according to any one of claims 1 to 4, wherein the processor determines the user terminal is located in the predetermined area based on the user terminal being able to perform communication via a wireless communication apparatus having a communication range overlapping the predetermined area of the store.

6. A transaction processing system, comprising:
a communication network;
a user terminal configured to acquire commodity codes from commodities to be purchased in a sales transaction; and
a transaction processing apparatus including:
a storage unit;
a communication interface connected to the communication interface; and
a processor configured to:
register a commodity in the sales transaction based on a commodity code sent from the user terminal via the communication network;
determine whether the user terminal is located in a predetermined area in a store; and
execute processing for permitting a user of the user terminal to settle the sales transaction using an online settlement service via the user terminal only when the user terminal is determined to be located in the predetermined area.

7. The transaction processing system according to claim 6, wherein the processor determines the user terminal is located in the predetermined area based upon receiving a predetermined permission code from the user terminal via the communication network.

8. The transaction processing system according to claim 6 or 7, wherein the processor is further configured to acquire a user identifier from the user terminal, and the user of the user terminal is permitted to use the online settlement service only if the user identifier is acquired from the user terminal.

9. The transaction processing system according to claim 8, wherein the processor is further configured to transmit a list of registered commodities in the transaction to an electronic receipt server associated with the acquired user identifier.

10. The transaction processing system according to any one of claims 6 to 9, wherein the processor determines the user terminal is located in the predetermined area based on the user terminal being able to perform communication via a wireless communication apparatus having a communication range overlapping the predetermined area of the store.

11. The transaction processing system according to any one of claims 6 to 10,
wherein
the processor determines the user terminal is located in the predetermined area based upon receiving a predetermined permission code from the user terminal via the communication network, and
the predetermined permission code is posted in the predetermined area.

12. The transaction processing system according to claim 11, wherein the user terminal includes a camera to image the posted predetermined permission code.

13. The transaction processing system according to any one of claims 6 to 12, wherein the user terminal is a smartphone.

14. The transaction processing system according to any one of claims 6 to 13, wherein the user terminal is a cart-based point-of-sale terminal.

15. An information processing method for retail transactions, the method comprising:
registering a commodity in a transaction based on commodity information sent from a user terminal via a communication interface;
determining whether the user terminal is located in a predetermined area in a store; and
executing processing for permitting a user of the user terminal to settle the transaction using an online settlement service via the user terminal only when the user terminal is determined to be located in the predetermined area.
